# EUROPÄISCHE PATENTSCHRIFT

(11) **EP 2 158 064 B1**
(45) Veröffentlichungstag und Bekanntmachung des Hinweises auf die Patenterteilung: **24.04.2013**
(21) Anmeldenummer: 08758936.2
(22) Anmeldetag: 02.06.2008
(51) Int. Cl.: B25J 9/16, F16P 3/14

(54) **PROZESSSTEUERUNG, SYSTEM UND VERFAHREN ZUR AUTOMATISIERTEN ANPASSUNG VON PROZESSPARAMETERN WENIGSTENS EINER HANDHABUNGSVORRICHTUNG**
PROCESS CONTROL, SYSTEM, AND METHOD FOR THE AUTOMATED ADAPTATION OF PROCESS PARAMETERS OF AT LEAST ONE HANDLING DEVICE
COMMANDE DE PROCESSUS, SYSTÈME ET PROCÉDÉ D'ADAPTATION AUTOMATISÉE DE PARAMÈTRES DE PROCESSUS D'AU MOINS UN DISPOSITIF DE MANIPULATION

(30) Priorität: 15.06.2007 DE 102007028390
(43) Veröffentlichungstag der Anmeldung: 03.03.2010
(73) Patentinhaber: ABB RESEARCH LTD., 8050 Zürich (CH)
(72) Erfinder: MATTHIAS, Björn, 76669 Bad Schönborn (DE); KRIEGER, Roland, 68526 Ladenburg (DE)
(74) Vertreter: Partner, Lothar
(86) Internationale Anmeldenummer: PCT/EP2008/004367
(87) Internationale Veröffentlichungsnummer: WO 2008/151739

(56) Entgegenhaltungen:
- EP-A- 1 306 603
- EP-A- 1 635 107

## Beschreibung

Die Erfindung betrifft ein System sowie ein Verfahren zur automatisierten Anpassung von Prozessparametern wenigstens einer Handhabungsvorrichtung, insbesondere wenigstens eines industriell einsetzbaren Roboters mit vorzugsweise sechs Achsen. Des Weiteren betrifft die Erfindung eine Prozesssteuerung mit vorgenanntem System.

Durch das fortschreitende Verschmelzen der Arbeitsbereiche von Menschen und Maschine und die damit einhergehende Intensivierung der Menschen - Maschinenkooperation sind immer höhere Sicherheitsanforderungen an moderne Automations- beziehungsweise Automatisierungssysteme gestellt, denen durch immer umfangreichere und zuverlässigere, aber in aller Regel auch komplexere Sicherheitskonzepte Rechnung zu tragen ist.

Nicht zuletzt durch die Integration entsprechender Sicherheitskonzepte in die jeweiligen Produktionsanlagen und/oder -prozesse, und insbesondere durch die Verfügbarkeit leistungsfähiger Steuer/Regeleinrichtungen mit entsprechenden Sicherheitseinrichtungen, auch mit sog. "safety controller", zur Überwachung und Steuerung und/oder Regelung insbesondere von Industrierobotern mit mehreren Achsen, sind neue Produktionskonzepte und Arbeitsumgebungen ermöglicht, welche eine Einbindung des Menschen als integralen Bestandteil des jeweiligen Produktions- und/oder Arbeitsprozesses erlauben.

Einfach konfigurierte Produktionskonzepte und/oder Arbeitsumgebungen sehen dabei beispielsweise hinsichtlich Aufbau, Dimensionierung und Verwendung/Anwendung starr beziehungsweise fest vorgegebene Arbeits- und/oder Produktionszellen mit entsprechenden Trenn-Gittern und/oder -Zäunen, Einfriedungen oder anderen physischen Abgrenzungen vor, welche eine strikte Separation der Arbeitsbereiche von Mensch und Maschine, insbesondere Roboter, bewirken und aufrechterhalten.

Diese Konzepte werden jedoch in verstärktem Maße durch immer flexibler nutzbare Arbeitsumgebungen, insbesondere Arbeitszellen mit leistungsfähigeren und flexibleren Sicherheitskonzepten, mit beispielsweise Sicherheitseinrichtungen wie "safety controller", Rolltoren oder-pforten sog. "shutter gates", Laser Scannern, Lichtvorhängen, Lichtschranken, Bewegungsdetektoren, Infrarotdetektoren, Radarüberwachung, Sicherheits-PLC's und weiteren derartigen Einrichtungen, abgelöst, um ein enges aber gleichzeitig auch sicheres beziehungsweise gefahrloses Zusammenwirken von Mensch und Maschine, insbesondere Roboter, zu ermöglichen und Synergieeffekte besser nutzbar zu machen.

Bei Anwendung vorgenannter Sicherheitskonzepte sind dabei im Wesentlichen zwei Hauptanforderungen an den jeweiligen Arbeitsprozess gestellt. So ist dieser zum Einen an die Sicherheitsanforderung und/oder -bestimmungen und/oder - konzepte der jeweiligen Arbeitsumgebung, insbesondere eine entsprechend aufgesetzte Arbeitszelle anzupassen, dies bedeutet, dass jeder Prozess individuell entwickelt und abgestimmt werden muss, um die Sicherheitsanforderungen und/oder -vorgaben der jeweiligen Arbeitszelle zu erfüllen. Der Programmierer beziehungsweise Entwickler hat dabei unter Anderem auch jene Bereiche und/oder Zonen zu berücksichtigen, welche der Roboter unter bestimmten Bedingungen nicht durchqueren und/oder in die er nicht eindringen darf, sowie Bereiche und/oder Zonen in denen sich der Roboter nut mit verminderter Geschwindigkeit bewegen darf und/oder Bedingungen, die es erforderlich machen dass der Roboter in Position verharrt und/oder in eine vorbestimmte Position verfährt und/oder still steht und sich nicht bewegt.

Beispielsweise sollte sich der der Roboter dann nur langsam in beziehungsweise durch einen Bereich bewegen, wenn ein Mensch sich in vorgenanntem Bereich oder in unmittelbarer Nähe zu diesem Bereich aufhält und beispielsweise zur Übernahme auf ein Werkstück wartet.

Weiterhin soll ein Roboter sich dann nicht mehr bewegen, beziehungsweise sollte in Position verharren, wenn er durch einen verschließbaren Zugang beispielsweise eine Rollpforte oder ein Rolltor ein Werkstück erhält und der Zugang geöffnet ist.

Eine Berücksichtigung aller Sicherheitsanforderungen ist dabei zwingend erforderlich, um eine prozessbedingte Verletzung gegebener Sicherheitsbestimmungen und/oder -grenzen weitestgehend zu vermeiden, um letztlich nicht durch die übergeordnete Sicherheitssystem gestoppt zu werden, was einen Prozessabbruch-, zumindest jedoch eine Prozessunterbrechung zur Folge haben würde.

Vorgenannte Maßnahmen - Prozessanpassungen und/oder Berücksichtigung aller Sicherheitsanforderungen - können jedoch einen erheblichen, zusätzlichen Aufwand bedeuten verglichen mit der Implementierung des gleichen Prozesses ohne Berücksichtigung entsprechend der Sicherheitsanforderungen.

Darüber hinaus ist zum Zweiten jeder einzelne Prozess daraufhin zu testen, ob er die gesetzten Sicherheitsanforderungen und die jeweiligen Regularien erfüllt. Demgemäß sind nach Implementierung eines Prozesses entsprechend Testprozeduren beziehungsweise -verfahren zu initiieren und zu durchlaufen, die jeden einzelnen Abschnitt eines Produktions- und/oder Arbeitszyklus oder - prozesses erfassen und abdecken. Demgemäß sind eine Vielzahl auch unterschiedliche Tests zu durchlaufen, damit sicher gestellt werden kann, dass alle Sicherheitsanforderungen und/oder -regularien beziehungsweise Richtlinien erfüllt sind.

Obschon dies einen immensen Aufwand - technischer Art aber letztlich auch an Zeit und Kosten - bedeutet, kann nur auf diese Weise sichergestellt werden, dass der jeweilige Prozess innerhalb gesetzter Spezifikation und Vorgabe abläuft und keine unerwarteten Verletzungen oder Verstöße vorbestimmter Sicherheitsmargen und/oder -regeln auftreten. Diese könnten im schlimmsten Fall auch dazu führen, dass das übergeordnete Sicherheitssystem einen Notfallstop beziehungsweise eine Notfallabschaltung des jeweiligen Prozesses und damit auch eine Abschaltung einer oder mehrerer eingesetzter Handhabungsvorrichtungen auslöst.

Nachteilig müsste somit jeder Prozess mit erheblichem Aufwand manuell an die jeweilige Arbeitszelle und die vorgegebenen Sicherheitsanforderungen und/oder - regularien angepasst werden. Eine entsprechende Automatisierung vorgenannten Prozesses ist bislang nicht möglich.

Auch ist es nicht möglich flexibel anpassbare Arbeitszellen zur Ausführung auch unterschiedlicher Arbeitsprozesse unter identischen Sicherheitskonzepten mit identischen Sicherheitsanforderungen beziehungsweise Vorgaben oder Regularien zu betreiben, da jeder einzelne Prozess darauf abgestimmt werden müsste den identischen/gleichen Satz von Sicherheitsbestimmungen/-vorgaben und/oder Regeln zu erfüllen. Darüber hinaus müsste noch jeder Prozess auf die Erfüllung und / oder Einhaltung der entsprechenden Bestimmungen, Vorgaben und/oder Regeln getestet werden, was einen immensen technischen und zeitlichen Aufwand bedeuten würde.

Dies gilt insbesondere angesichts komplexerer Zellenaufbauten mit beispielsweise wenigstens einer zusätzlichen Werkzeugmaschine und/oder Werkstückbearbeitung und/oder bei Verwendung von zwei oder mehreren Handhabungsvorrichtungen in nur einer Zelle, wobei bei gegebenenfalls beiden Handhabungsvorrichtungen aufeinender abzustimmen und/oder Vorrichtungsspezfische Vorgaben und/oder Anforderungen -auch sicherheitsgerichteter Art - zu berücksichtigen sind.

EP 1 635 107 A zeigt den Oberbegriff der vorliegenden Erfindung.

Der vorliegenden Erfindung liegt somit die Aufgabe zu Grunde eine vereinfachte und verbesserte Möglichkeit zur insbesondere sicherheitsgerichteten Abstimmung eines Arbeitsprozesses auf eine Arbeitsumgebung bereitzustellen, wobei wenigstens eine Handhabungsvorrichtung zur Prozessausführung vorgesehen ist.

Diese Aufgabe wird durch ein System zur automatisierten Anpassung von Prozessparametern wenigstens einer Handhabungsvorrichtung gelöst, welches die Merkmale des Anspruches 1 aufweist. Vorteilhafte Ausgestaltungen und Weiterbildungen des Systems sowie ein entsprechendes Verfahren und eine Prozesssteuerung mit vorgenanntem System sind in weiteren Ansprüchen und der nachfolgenden Beschreibung angegeben.

Das erfindungsgemäße System zur automatisierten Anpassung von Prozessparametern wenigstens einer Handhabungsvorrichtung, wirkt mit wenigstens einer Steuer-/Regeleinrichtung, insbesondere mit Sicherheitssteuerung, zur Überwachung und/oder Steuerung und/oder Regelung der wenigstens einen Handhabungsvorrichtung zusammen, wobei wenigstens eine Kontrolleinrichtung vorgesehen ist, die wenigstens einen Prozessparameter selektiv überwacht und im Bedarfsfall vorgaben- und/oder umgebungsabhängig und/oder regelbasiert im Zusammenwirken mit der wenigstens einen Steuer-/Regeleinrichtung wenigstens einen Prozessparameter der wenigstens einen Handhabungsvorrichtung automatisiert anpasst, wobei umgebungs- und/oder sicherheitsspezifische Vorgaben und/oder Bestimmungen auch unabhängig von der Art des jeweiligen Arbeitsprozesses eingehalten und/oder umgesetzt sind.

Sind mehr als nur eine Handhabungsvorrichtung eingesetzt, so wird die Anpassung des wenigstens einen Prozessparameters wenigs- tens einer Handhabungsvorrichtung auch in Abhängigkeit beziehungsweise unter Berücksichtung von Position und/oder Ausrichtung und/oder Geschwindigkeit der jeweils anderen Handhabungsvorrichtungen bewirkt.

In einer vorteilhaften Weiterbildung des Systems ist die Anpassung des wenigstens einen Prozessparameters vorausschauend bewirkt.

In einer Systemausgestaltung ist wenigstens eine Schnittstelle vorsehbar, durch welche eine Erfassung und/oder Bestimmung von Umgebungsinformationen, insbesondere von Sensor- und/oder Schalt- und/oder Zustandsinformationen eingesetzter Betriebsmittel und/oder Überwachungseinrichtungen, beispielsweise das Öffnen und/oder Schließen von Pforten, das Auslösen/Signalgeben von Lichtschranken und dergleichen, ermöglicht ist.

Systemgemäß ist dabei vorsehbar, dass als Arbeitsumgebung der Aufbau und/oder die Struktur wenigstens einer Arbeitszelle, in welcher eine oder mehrere Handhabungsvorrichtungen anordenbar sind, erfasst und/oder zugrunde gelegt ist, wobei insbesondere auch verschiedene Arbeits- und/oder Sicherheitsbereiche, Lichtschranken, Grundriss und/oder Aufteilung der jeweiligen Arbeitszelle, Zonen mit beispielsweise unterschiedlichen Geschwindigkeiten, Arbeitsstationen der Handhabungsvorrichtung, Pforten und dergleichen mehr erfassbar sind.

In einer weiteren vorteilhaften Ausgestaltung des Systems ist vorgesehen, dass die Anpassung des wenigstens einen Prozessparameters der wenigstens einen Handhabungsvorrichtung in Abhängigkeit von Position und/oder Ausrichtung der wenigstens einen Handhabungsvorrichtung bewirkt ist.

In einer Systemweiterbildung ist wenigstens eine Schnittstelle vorgesehen, welche die Erfassung und/oder Übertragung vorbestimmter Prozessinformationen durch und/oder an die Steuer-/Regeleinrichtung ermöglicht. Die wenigstens eine Schnittstelle kann dabei drahtlos, beispielsweise als WLAN-, Bluetooth-, IR- oder GPRS-Schnittstelle, oder drahtgebunden, beispielsweise als PCI-, SCSI-, Firewire, LAN-, Ethernet, USB- oder RS-232- Schnittstelle, ausgebildet sein. Auch entsprechende Feldbusschnittstellen, wie beispielsweise PROFIBUS, CAN-BUS oder Fieldbus Foundation sind vorteilhaft vorsehbar.

In einer Weiterbildung des Systems ist vorgesehen, dass die Kontrolleinrichtung der wenigstens einen Handhabungsvorrichtung Positions- und/oder Umgebungsinformationen kontinuierlich oder zyklisch, oder in wiederkehrenden Zeitintervallen kontinuierlich erfasst, auswertet und zur Parameterbestimmung und/oder Parameteranpassung einsetzt.

Die Erfassung der Positionsinformationen kann dabei im Zusammenwirken mit der Steuer-/Regeleinrichtung und/oder der Sicherheitssteuerung, insbesondere durch Auslesen von Sensoren, Signalgebern, Endschaltern, sowie von Achslagen, Gelenkstellungen, Strom-/Spannungswerten der Antriebseinheiten der jeweiligen Handhabungsvorrichtung erfolgen.

In einer weiteren vorteilhaften Ausgestaltung verfügt das System über wenigstens einen Datenspeicher, auf dem Prozessinformationen und/oder Umgebungsinformationen und/oder Handlungsanweisungen, insbesondere in Form von Programmcodemittel, sowohl für die Steuer-/Regeleinrichtung als auch die Kontrolleinrichtung abrufbar und/oder ausführbar gespeichert sind.

In einer weiteren Ausgestaltung umfasst die Steuer-/Regeleinrichtung wenigstens eine Datenverarbeitungseinrichtung, welche mit dem wenigstens einen Datenspeicher mit Prozessinformationen und/oder Handlungsanweisungen, insbesondere in Form von Programmcodemitteln, zur Ausführung und/oder Umsetzung des jeweiligen Arbeitsprozesses für die Handhabungsvorrichtung zusammenwirkt.

In einer weiteren Ausgestaltung ist die Kontrolleinrichtung in die Steuer-/Regeleinrichtung integrierbar und/oder insbesondere als Einschubelement ausgebildet.

In vorteilhafter Ausgestaltung umfasst die Kontrolleinrichtung eine Datenverarbeitungseinrichtung, insbesondere einen Mikroprozessor und/oder eine SPS, und/oder einen Datenspeicher.

Insbesondere sind die jeweiligen Handlungsanweisungen und/oder Bewegungs-/Handlungsmuster dabei allein durch den jeweiligen Arbeitsprozess bestimmt und/oder umfassen, beziehungsweise berücksichtigen nahezu keine umgebungsspezifischen Vorgaben.

In einer Weiterbildung des Systems ist vorsehbar, dass die Anpassung des wenigstens einen Prozessparameters der wenigstens einen Handhabungsvorrichtung durch die Kontrolleinrichtung dynamisch, das heißt auch bei sich ändernden Umgebungsbedingungen und/oder Umgebungsinformationen, wie beispielsweise Änderungen von Schaltzuständen, sich ändernden Sensor- und/oder Positionsinformationen, insbesondere auch anderer Handhabungsvorrichtungen, und dergleichen mehr erfolgt.

Vorteilhaft ist weiterhin vorsehbar, dass die Kontrolleinrichtung die Anpassung des wenigstens einen Prozessparameters, das heißt die Änderung von einem Ist- auf einen Sollwert, umgebungs- und/oder vorgabenabhängig mittels einer stetigen Funktion, insbesondere mit einem linearen, parabolischen, exponentiellen, oder logarithmischen Verlauf, oder mittels einer Sprungfunktion bewirkt.

Eine Systemausgestaltung sieht vor, dass die Kontrolleinrichtung als wenigstens einen Prozessparameter die Geschwindigkeit und/oder wenigstens eine Geschwindigkeitskomponente und/oder die Orientierung und/oder die Ausrichtung und/oder die Position der wenigstens einen Handhabungsvorrichtung und/oder ihres Werkzeuges anpasst.

Weiterhin ist vorsehbar, dass die Anpassung des wenigstens einen Prozessparameters durch die Kontrolleinrichtung online, das heißt im laufenden Betrieb der Handhabungsvorrichtung während der jeweiligen Prozessausführung, bewirkt wird.

In einer weiteren Ausgestaltung ist eine Sicherheitseinrichtung, insbesondere eine übergeordnete Sicherheitseinrichtung vorgesehen, welche bei Verletzung vorbestimmter Sicherheitsregularien und/oder Abweichungen von Parametervorgaben außerhalb vorbestimmter Grenzen, eine Notfallabschaltung des Systems, insbesondere der wenigstens einen Handhabungsvorrichtung, bewirkt, wobei Kontrolleinrichtungen und Sicherheitseinrichtungen unabhängig voneinander agieren und sich nicht beeinflussen.

Auch ist vorsehbar, dass Kontrolleinrichtungen und Sicherheitseinrichtungen derart zusammenwirken, dass in der Sicherheitseinrichtung erfasste Umgebungsinformationen und/oder umgebungsspezifische Vorgaben und/oder Kenngrößen von der Kontrolleinrichtung abrufbar und/oder für die Parameteranpassung nutzbar sind.

In vorteilhafter Weiterbildung des Systems ist wenigstens eine Handhabungsvorrichtung als Industrieroboter, insbesondere als Industrieroboter mit sechs Achsen und/oder Gelenken ausgebildet.

Weiterhin ist vorsehbar, dass es sich bei wenigstens einer Handhabungsvorrichtung um einen Schleif-, Schweiß-, Lackier- oder einen Roboter mit Greifwerkzeug oder einem anderen Werkzeug handelt.

Weiterhin wird eine Prozesssteuerung zur Steuerung/Regelung wenigstens einer Handhabungsvorrichtung zur Ausführung eines Arbeitsprozesses beansprucht, welche die gestellte Aufgabe löst und welche eine Steuer-/Regeleinrichtung und Sicherheitssteuerung sowie ein System zur automatisierten Anpassung von Prozessparametern wenigstens einer Handhabungsvorrichtung umfasst.

Eine Ausgestaltung der Prozesssteuerung sieht vor, dass der Steuer- / Regeleinrichtung mit einem Planungswerkzeugs, insbesondere einem "motion planner", erstellte prozessspezifische Bewegungsmuster und/oder demgemäße Handlungsanweisungen für die wenigstens eine Handhabungsvorrichtung zur Umsetzung und/oder Ausführung übertragbar und/oder aufprägbar sind.

Weiterhin kann vorteilhaft vorgesehen sein, dass wenigstens eine Schnittstelle vorgesehen ist, welche die Erfassung und/oder Übertragung vorbestimmter Prozessinformationen durch und/oder an die Steuer-/Regeleinrichtung (50) und/oder die Erfassung sowie Verarbeitung von Sensor- und/oder Zustandsinformationen auch eingesetzter Betriebsmittel ermöglicht.

Die wenigstens eine Schnittstelle kann dabei drahtlos, insbesondere als WLAN, Bluetooth-, IR- oder GPRS- Schnittstelle, oder drahtgebunden, insbesondere als PCI-, SCSI-, Firewire, LAN-, Ethernet, USB- oder RS-232-Schnittstelle, oder auch als Feldbusschnittstelle, insbbesondere als PROFIBUS- oder CAN-BUS-Schnittstelle, ausgebildet sein.

Durch das vorbeschriebene System, die Prozesssteuerung sowie das entsprechende Verfahren wird eine automatisierte und/oder kontinuierliche Abstimmung eines Arbeitsprozesses auf eine jeweils vorgegebene Arbeitsumgebung unter Einbeziehung wenigstens einer Handhabungsvorrichtung bei vergleichsweise geringem Aufwand ermöglicht.

Die weitere Darlegung der Erfindung sowie vorteilhafter Ausgestaltungen und Weiterbildungen erfolgt anhand einiger Zeichnungen und Ausführungsbeispiele.

Es zeigen
- Fig. 1: beispielhaft ausgebildete Arbeitszelle mit verschiedenen Arbeitsbereichen und Zonen
- Fig. 2: idealisierter Prozess in einer beispielhaft ausgestalteten Arbeitszelle
- Fig. 3a, b Fig. 4: Aufbau und Abhängigkeit einer herkömmlichen Prozesssteuerung herkömmliche Prozesssteuerung mit Steuer-/Regeleinrichtung mit Sicherheitssteuerung für wenigstens eine Hanhabungsvorrichtung
- Fig. 5: herkömmlicher Prozessablauf in einer beispielhaft ausgebildeten Arbeitszelle
- Fig. 6a, b: Aufbau und Abhängigkeiten einer Prozesssteuerung mit System zur automatisierten Anpassung von Prozessparametern wenigstens einer Handhabungsvorrichtung,
- Fig. 7: Prozesssteuerung mit beispielhaft ausgebildetem System zur automatisierten Anpassung von Prozessparametern wenigstens einer Handhabungsvorrichtung,
- Fig. 8: Prozessablauf gemäß Verfahren zur automatisierten Anpassung von Prozessparametern wenigstens einer Handhabungsvorrichtung.

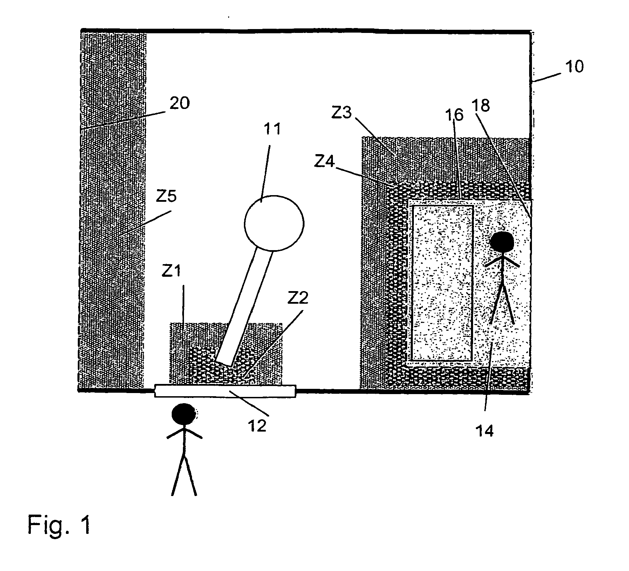

In Fig. 1 ist eine beispielhaft ausgebildete Arbeitszelle 10 mit wenigstens einer Handhabungsvorrichtung 11, insbesondere ein sechsachsiger Industrieroboter, sowie mit einem Bereich für manuelle Werkstückzuführung mit Rollpforte 12 und einem manuellen Arbeitsbereich 14, beispielsweise zur Werkstückentnahme, angegeben. Der manuelle Arbeitsbereich 14 ist durch einen ersten Lichtvorhang 16, insbesondere ein oder mehrere Lichtschranken und/oder Laser Scanner vom Innenbereich 15 der Arbeitszelle sowie durch einen zweiten Lichtvorhang 18, insbesondere ein oder mehrere Lichtschranken und/oder Laser Scanner, vom Außenbereich der Zelle separiert. Der Bereich der manuellen Werkstückzuführung mit Rollpforte 12 ist dabei in eine erste sicherheitsrelevante Zone Z1 und in eine zweite sicherheitsrelevante Zone Z2 unterteilbar. Auch um den manuellen Arbeitsbereich 14 herum sind zwei sicherheitsrelevante Zonen vorgesehen, nämlich eine dritte Zone Z3 und eine vierte Zone Z4. Zusätzlich ist ein dritter Lichtvorhang 20 vorgesehen, der die Zelle 10 zur linken Seite (linke Seite in Draufsicht auf Fig. 1) hin gegen den Außenbereich um die Arbeitszelle abgrenzt. Vor diesem dritten Lichfvorhang 20 ausgehend ist eine weitere fünfte ins Innere der Zelle gerichtete sicherheitsrelevante Zone Z5 vorgehen.

Für die verschiedenen Bereich 12, 14, 15 und/oder Zonen Z1,Z2,Z3,Z4,Z5 können dabei unterschiedliche Prozessvorgaben und/oder Prozessparametervorgaben und/oder Bedingungen für die Handhabungsvorrichtung sowie damit einhergehende einzuhaltende Sicherheitsbestimmungen definiert und/oder vorgegeben sein. Diese zielen in aller Regel darauf ab, Gefährdungen und insbesondere Beschädigungen und Verletzungen von Menschen und/oder Maschine zu verhindern und ein sicheres Zusammenwirken sowie einen sicheren und möglichst reibungslosen beziehungsweise störungsfreien Prozessablauf zu ermöglichen. So kann beispielsweise vorgegeben sein, dass sich die Handhabungsvorrichtung 11, insbesondere ein 6-achsiger Roboter, in ausgewählten Zonen unter bestimmten Umgebungsbedingungen und/oder Vorgaben, wie insbesondere Pforte 12 offen oder geschlossen, Mensch anwesend oder abwesend, weiterer Roboter in unmittelbarer Nähe und dergleichen, lediglich mit reduzierter beziehungsweise verminderter Geschwindigkeit bewegt. Dies gilt im hier gezeigten Beispiel für die erste Zone Z1, falls die Pforte 12 geöffnet ist, sowie die dritte Zone Z3, falls sich ein Mensch, insbesondere ein Arbeiter, Techniker oder Ingenieur, innerhalb des manuellen Arbeitsbereichs 14 aufhält und auch für die fünfte Zone Z5, da sich diese in unmittelbarer Nähe zum Außenbereich befindet. Die jeweils vorherrschenden Umgebungsbedingungen lassen sich anhand entsprechender Umgebungsinformationen, wie Schaltzustände eingesetzter Betriebsmittel, Sensor- und/oder Überwachungsinformationen ermitteln und/oder bestimmen.

Weiterhin ist vorgebbar, dass der jeweilige Roboter 11 beziehungsweise der jeweilige Prozess angehalten werden beziehungsweise ab- oder ausgeschaltet werden, wenn sich der Roboter 11 in andere ausgewählte Zonen, hier die zweite Zone Z2 falls die Pforte 12 geöffnet ist und die vierte Zone Z4 falls ein Mensch im manuellen Arbeitsbereich 14 anwesend ist, hineinbewegt.

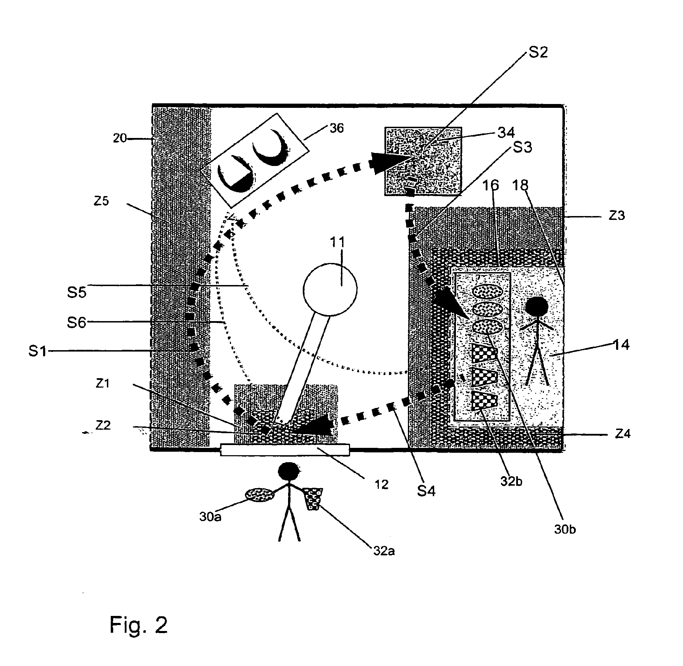

In Fig. 2 ist ein idealisierter Ablauf eines Arbeitsprozesses in einer beispielhaft ausgestalteten Arbeitszelle gezeigt, welche zusätzlich zu Fig. 1 noch eine Station zum Werkzeugwechsel 36 sowie eine maschinelle Werkstückbearbeitung 34 Umfasst. Bei vorgenanntem Arbeitsprozess werden verschiedenartige, zu bearbeitende Werkstücke 30a, 32a manuell durch eine Rollpforte 12, welche geöffnet und geschlossen werden kann, in die Arbeits- oder Produktionszelle 10 verbracht. Die eingebrachten Werkstücke 30a, 32a sind prozessgemäß von wenigstens einer Handhabungsvorrichtung 11 zu erfassen, aufzunehmen und in einem ersten Schritt S1 zu einer maschinellen Bearbeitungsstation 34, beispielsweise eine Werkzeug-/Bearbeitungsmaschine 34 zur weiteren Be- und/oder Verarbeitung zu verbringen. Um auch geometrisch unterschiedliche Werkstücke Aufnehmen und Handhaben zu können, ist in der Arbeitszelle für die Handhabungsvorrichtung 11 ein Werkzeugwechsler beziehungsweise eine Station zum Werkzeugwechsel 36 vorgesehen, welcher es ermöglicht beispielsweise unterschiedliche Greifwerkzeuge bedarf- und/oder werkstückabhängig zu selektieren und zu applizieren.

In einem zweiten Schritt S2 ist das jeweilige Werkstück 30a, 32a dann maschinell zu Bearbeiten und danach die bearbeitenden Werkstücke 30b, 32b in einem Schritt S3 erneut zu erfassen, aufzunehmen und in den manuellen Arbeitsbereich 14 zur manuellen Entnahme, Weiterbe- und/oder -verarbeitung und/oder Kontrolle zu verbringen. Anschließend bewegt sich Handhabungsvorrichtung 11, nunmehr ohne Werkstück 30a, 32a, in einem vierten Schritt S4 zurück zur Pforte 12, um das nächste Werkstück aufzunehmen. Sollte vor Aufnahme des nächsten Werkstückes ein Werkzeugwechsel erforderlich sein so würde sich die Handhabungsvorrichtung 11 alternativ zum vierten Schritt S4 in einem ersten alternativen Schritt S5 zur Wechselstation bewegen, den Werkzeugwechsel durchführen und sich in einem weiteren alternativen Schritt S6 zurück zur Pforte 12 bewegen.

Die den einzelnen Schritte S1,S3,S4,S5,S6 entsprechenden Bewegungspfade der Handhabungsvorrichtung 11 sind durch Pfeile kenntlich gemacht.

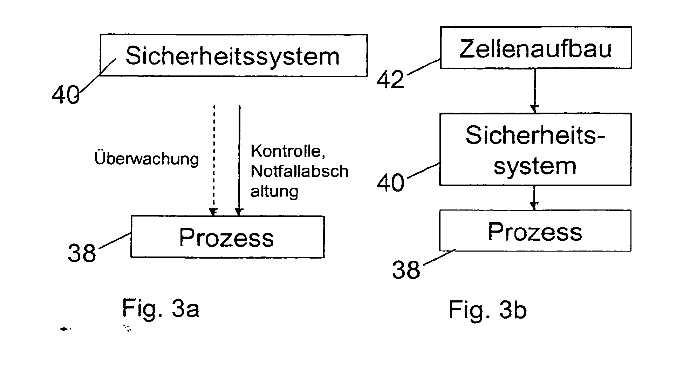

In Fig. 3a ist der Aufbau einer herkömmlichen Prozesssteuerung für eine beispielhaft ausgebildete Produktions- beziehungsweise Arbeitszelle 10 gezeigt. Dabei wird der jeweilige Arbeitsprozess 38, beispielsweise die Montage eines Produktes aus verschiedenen Werkstücken, Zwischenprodukten oder Komponenten, die Weiterverarbeitung einer Werkstückes, sowie die Herstellung und/oder Handhabung eines Werkstückes und damit auch die Bewegungen der wenigstens einen Handhabungsvorrichtung 11, in aller Regel von einem Sicherheitssystem 40 beziehungsweise sicherheitsgerichteten System überwacht und kontrolliert. Überwachung und Kontrolle des jeweiligen Arbeitsprozesses 38 erfolgen dabei dahingehend, dass das Sicherheitssystem 40 dafür eingerichtet ist zu erkennen, wenn vorbestimmte Sicherheitsregularien und/oder Prozessvorgaben oder -relevante Parameter und/oder Bedingungen nicht erfüllt beziehungsweise missachtet werden, und bei vorliegender Verletzung umgehend eine Notfallabschaltung beziehungsweise Beendigung des jeweiligen Arbeitsprozesses 38 zu bewirken.

Dies zu erreichen sind, wie in Fig. 3b angegeben, bestimmte Abhängigkeiten und/oder Verknüpfungen zu berücksichtigen. So ist stets das Sicherheitssystem 40 in Abhängigkeit der jeweiligen Arbeitsumgebung beziehungsweise des jeweiligen Zellenaufbaus 42 auszubilden und/oder aufzusetzen. Weiterhin ist jeder Arbeitsprozess 38 individuell dahingehend auszugestalten oder anzupassen, dass er die durch das Sicherheitssystem 40 und damit auch den Zellenaufbau 42 vorgegebenen Sicherheitsregularien und/oder Anforderungen und/oder Vorgaben und/oder Bedingungen, wie beispielsweise ortsabhängige Geschwindigkeitsbeschränkungen, Einschränkungen der Bewegungsfreiheit der Handhabungsvorrichtung, oder Werkzeugvorgaben, berücksichtigt und/oder erfüllt, so dass ein Störfall im Regelfall vermieden ist.

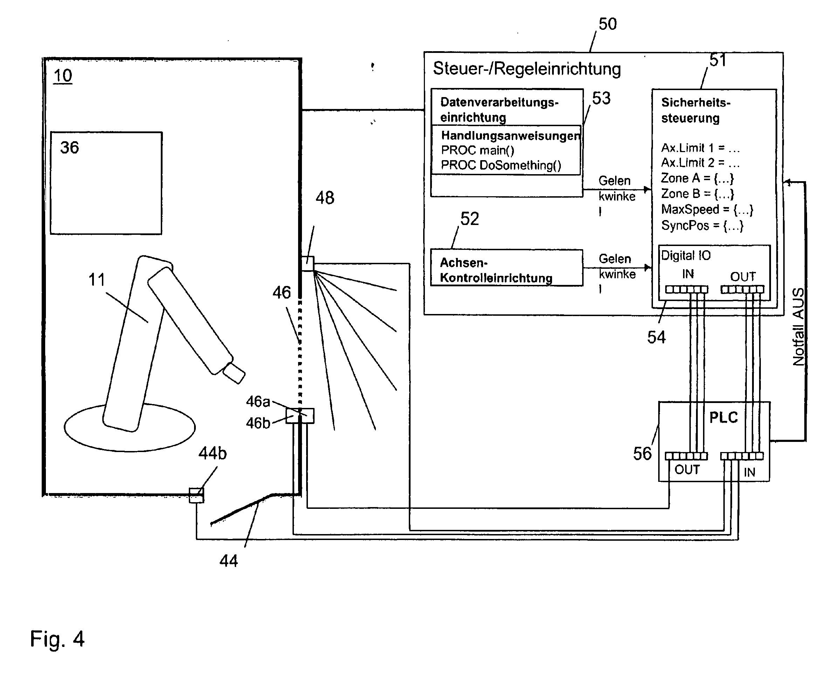

In Fig. 4 ist eine herkömmliche zur Prozessumsetzung, im hier gezeigten Beispiel zur Umsetzung des im Wesentlichen aus Fig. 2 bekannten Arbeitsprozess unter Verwendung einer Arbeitszelle 10 mit Handhabungsvorrichtung 11, maschineller Werkstückbearbeitung 36, einer Tür 44 mit Schalter 44b, einem Rolltor 46 mit Antrieb 46a mit Schalter 46b sowie einem Laser Scanner 48 zu dessen Umgebungsüberwachung, eingesetzte Prozesssteuerung mit Steuer-/Regeleinrichtung 50 mit Sicherheitssteuerung 51 für wenigstens eine Handhabungsvorrichtung gezeigt. Die Steuer-/Regeleinrichtung 50 umfasst weiterhin eine Achs-Kontrolleinrichtung 52 zur Erfassung und Kontrolle von Gelenkwinkel, Achs- und/oder Werkzeugposition und/oder Ausrichtung der Handhabungsvorrichtung 11. Die Steuer-/Regeleinrichtung 50 umfasst weiterhin eine Datenverarbeitungseinrichtung 53 welche im Zusammenwirken mit einem Datenspeicher (in Fig. 4 nicht explizit dargestellt) vorbestimmte Handlungsanweisungen zur Ausführung und Umsetzung des jeweiligen Arbeitsprozesses 38 an die Handhabungsvorrichtung 11 übermittelt. Im Zusammenwirken mit der Datenverarbeitungseinrichtung 53 sowie der Achsen-Kontrolleinrichtung 52 werden mittels der Sicherheitssteuerung 51 an vorbestimmten Synchronisations-Positionen die jeweils mittels Datenverarbeitungseinrichtung 53 und der Achsenkontrolleinrichtung 52 ermittelten Gelenk- und/oder Achswinkel miteinander verglichen und/oder abgeglichen und damit die jeweilige Position und Ausrichtung der Handhabungsvorrichtung 11 überprüft und gegebenenfalls korrigiert.

Werden dabei durch die Sicherheitssteuerung vorgegebene Grenzwerte einzelner Prozessparameter und/oder Prozessvorgaben für bestimmte Bereiche und/oder Zonen der Arbeitszelle überschritten oder unterschritten, löst die Sicherheitssteuerung im Zusammenwirken mit einer Speicherprogrammierbaren Steuerung (SPS) und/oder eines PLC's 56 eine Notfallabschaltung der Steuer-/Regeleinrichtung 50 beziehungsweise der Handhabungsvorrichtung 11 aus. Weiterhin wirkt der PLC mit verschiedenen Überwachungseinrichtungen, wie beispielsweise Endschaltern, Lichtschranken zusammen, um zusätzliche Umgebungsinformationen abzurufen und auszuwerten. So kann vorgabenabhängig eine Notafallabschaltung beispielsweise auch schon dann ausgelöst werden, wenn die Tür 44 zur Arbeitszelle 10 geöffnet ist was durch den Schalter 44b erfasst ist, oder wenn sich ein Mensch im Erfassungsbereich des Laser Scanners 48 aufhält.

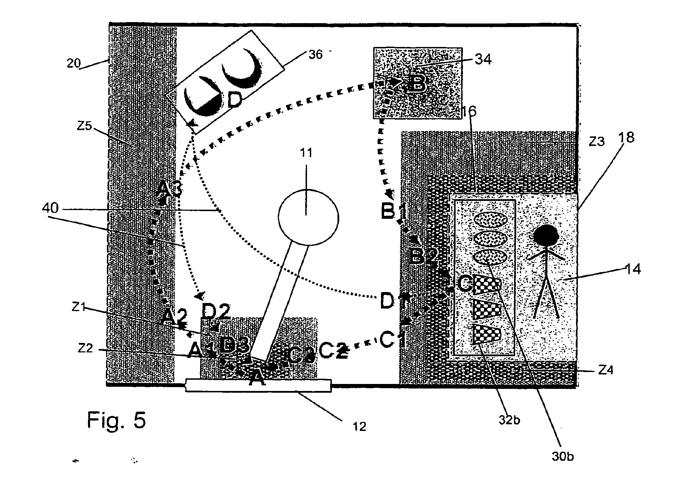

In Fig. 5 ist ein mit herkömmlicher Steuer-/Regeleinrichtung 50 mit Sicherheitssteuerung 51 umgesetzter Prozessablauf des idealisierten Prozesses gemäß Fig. 2 gezeigt. Demgemäße Handlungsanweisungen an die Handhabungs-vorrichtung 11 in Form von Programmcodemitteln zur Umsetzung und/oder Ausführung durch Prozesssteuerung und Handhabungsvorrichtung 11 sind nachstehend beispielhaft angegeben:

```
 //Initial state: robot at A, gate open
  ● WHILE true DO
           - pick up work piece;
           - close gate;
           - WAIT UNTIL gate closed;
           - set speed = slow;
           - move to A1;
           - set speed = high;
           - move to A2;
           - set speed = low;
           - move to A3;
           - set speed = high;
           - move to B;
           - process work piece;
           - move to B1;
           - set speed = low;
           - move to B2;
           - WAIT UNTIL no worker present
           - move to C;
           - put down work piece;
           - IF next work piece NOT same as current
                       ● move to D1;
                       ● set speed = high;
                       ● move to D;
                       ● change tool;
                       ● move to D2;
                       ● set speed = low;
                - ELSE move to D3;
           - ELSE
                       ● move to C1;
                       ● set speed = high;
                       ● move to C2;
                       ● set speed = low;
                       ● Move to C3;
           - ENDIF
           - move to A;
           - open gate;
   ● ENDWHILE
```

Gemäß vorstehenden Handlungsanweisungen ist der idealisierte Prozess nach Fig. 2 herkömmlich durch nachfolgenden Prozessablauf umsetzbar.

Der Prozess beginnt an Ausgangspunkt A, der Pforte 12, falls diese geöffnet ist. Befindet sich die Handhabungsvorrichtung 11, insbesondere der Roboter, am Ausgangspunkt A und ist die Pforte 12 geöffnet (ideale Ausgangssituation), so soll er, wenn diese Voraussetzungen zu Beginn gegeben sind, ein erstes Werkstück 30a aufnehmen, die Pforte schließen, warten bis die Pforte 12 geschlossen ist und sich dann mit langsamer Geschwindigkeit durch Z2 von A nach A1 bewegen, sich dann bei geschlossenem Tor mit hoher Geschwindigkeit von A1 nach A2 bewegen, sich dann mit geringer Geschwindigkeit durch Z1 von A2 nach A3 bewegen, sich dann mit hoher Geschwindigkeit von A3 nach B bewegen, bei B das aufgenommene Werkstück 30a bearbeiten, sich dann mit nach wie vor hoher Geschwindigkeit mit dem bearbeitenden Werkstück 30b nach B1 bewegen, sich dann mit geringer Geschwindigkeit durch Z3 von B1 nach B2 bewegen, an B2 so lange verharren beziehungsweise warten bis kein Mensch oder Arbeiter im jeweiligen manuellen Arbeitsbereich 14 anwesend ist, sich dann langsam durch Z4 nach C bewegen und das bearbeitende Werkstück 30b ablegen. Bevor nun das nächste Werkstück 30a, 32a aufgenommen werden kann gilt es zu prüfen, ob das nachfolgende Werkstück 30a, 32a dem Vorherigen entspricht oder nicht, demgemäß ergeben sich zwei Alternativen.
1. Das nächste zu handhabende, zweite Werkstück 32a unterscheidet sich vom vorausgehenden ersten Werkstück 30a, so dass zu dessen Handhabung zunächst ein Werkzeugwechsel erforderlich ist. Dementsprechend bewegt sich die Handhabungsvorrichtung 11 zunächst langsam durch die Zone Z4 und Z3 von C nach D1, dann mit schneller Geschwindigkeit von D1 nach D, wechselt das Werkzeug bei D, bewegt sich dann mit schneller Geschwindigkeit von D nach D2 und bewegt sich dann mit langsamer Geschwindigkeit durch Zone Z1 von D2 nach D3.
2. Das nächste zu handhabende, zweite Werkstück 30a ist identisch mit dem vorherigen, so dass zu dessen Handhabung kein Werkzeugwechsel erforderlich ist. Demgemäß bewegt sich der Roboter mit langsamer Geschwindigkeit durch die Zonen Z4 und Z3 von C nach C1, dann mit schneller Geschwindigkeit von C1 nach C2 und dann mit langsamer Geschwindigkeit durch Zone Z1 von C2 nach C3.

Ausgehend von D3 oder C3 bewegt sich der Roboter dann mit langsamer Geschwindigkeit durch Zone Z2 zum Ausgangspunkt A und öffnet die Pforte 12, um beispielsweise das nächste Werkstück aufzunehmen und der vorbeschriebene Ablauf beginnt von Neuem.

Weiterhin könnte beispielsweise auch vorbestimmt sein, dass die Handhabungsvorrichtung 11 bei C3 oder D3 verharrt, also sich nicht in Zone Z1 bewegt, solange die Pforte 12 geöffnet ist.

Wird eine der gesetzten Vorgaben oder Bestimmungen verletzt, beispielsweise weil sich der Roboter fälschlicherweise in einer Zone zu schnell bewegt, oder prozessgemäß an einer Position beispielsweise nicht lange genug verharrt, so führt dies unweigerlich zu einer Eingriffnahme durch die Sicherheitssteuerung 51 und zu einer Abschaltung der Handhabungsvorrichtung 11 und damit einer Prozessunterbrechung.

Daraus ist ersichtlich, dass jede noch so kleine Sicherheitsbestimmung und/oder Vorgabe im jeweiligen Prozess, beziehungsweise dem ihm zugrunde liegenden Bewegungsmuster, individuell berücksichtigt werden und der Prozess dahingehend angepasst werden muss, was bei einer Vielzahl unterschiedlicher Prozesse oder gar bei Umstellungen von Prozessen und/oder Modemisierungen nur mit erheblichem Aufwand realisierbar ist.

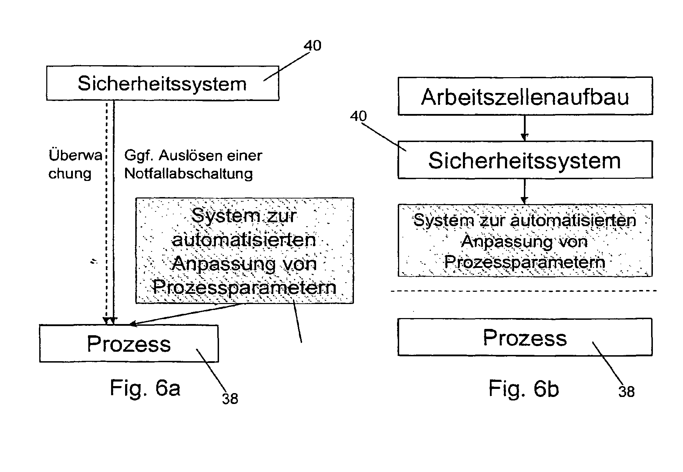

In Fig. 6a ist der Aufbau einer Prozesssteuerung mit beispielhaft ausgebildetem System zur automatisierten Anpassung von Prozessparametern einer Handhabungsvorrichtung 11 gezeigt.

Dabei wird der jeweilige Arbeitsprozess, beispielsweise die Montage eines Produktes aus verschiedenen Werkstücken, Zwischenprodukten oder Komponenten, die Weiterverarbeitung oder Bearbeitung eines Werkstückes, sowie die Herstellung und/oder Handhabung eines Werkstückes und damit auch die Bewegung der wenigstens einen Handhabungsvorrichtung 11, von einem Sicherheitssystem 40 beziehungsweise sicherheitsgerichteten System überwacht und gesteuert. Überwachung und Steuerung durch das Sicherheitssystem 40 erfolgen dahingehend, dass das Sicherheitssystem 40 detektiert beziehungsweise erfasst, wenn vorbestimmte Prozessvorgaben, insbesondere auch sicherheitskritische oder - relevante Bestimmungen und/oder Bedingungen, verletzt beziehungsweise missachtet werden, und dass bei vorliegender Verletzung umgehend eine Notfallabschaltung beziehungsweise Beendigung des jeweiligen Arbeitsprozesses 38 ausgelöst und/oder bewirkt wird.

Zusätzlich zu vorgenanntem Sicherheitssystem 40 ist ein System zur automatisierten Prozessanpassung vorgesehen, welches bei potentiellen beziehungsweise drohenden Konflikten und/oder kritischen Situationen, das heißt bei drohender Verletzung von Vorgaben, insbesondere sicherheitstechnischer Art, vorausschauend, das heißt bevor ein solcher Konflikt auftritt, automatisiert eine vorgaben-und/oder umgebungsabhängige und/oder regelbasierte Anpassung des wenigstens einen kritischen Prozessparameters der Handhabungsvorrichtung 11, beispielsweise von Positionskoordinaten, Ausrichtung, Geschwindigkeit und dergleichen, bewirkt, um den drohenden Konflikt und damit letztlich auch eine Abschaltung beziehungsweise Unterbrechung des jeweiligen Prozesses durch das Sicherheitssystem 40 zu vermeiden beziehungsweise zu verhindern.

Dies zu erreichen sind, wie in Fig. 6b gezeigt, auch hier gegebene Abhängigkeiten zu berücksichtigen. So sind stets das Sicherheitssystem 40 sowie das System zur automatisierten Anpassung von Prozessparametern in Abhängigkeit des jeweiligen Zellenaufbaus beziehungsweise der jeweiligen Zellenarchitektur auszubilden und/oder aufzusetzen, wobei sicherheitsgerichtete Parametervorgaben und/oder Bestimmungen im Zugriff auf das Sicherheitssystem von diesem übernommen werden können.

Darüber hinaus ist jedoch keine vorbereitende individuelle Anpassung des jeweiligen Arbeitsprozesses 38 an die jeweilige Arbeitsumgebung, insbesondere die Arbeitszelle, und damit auch die jeweiligen Zellenarchitektur, sowie mit dem Aufbau mehr erforderlich, dass das System sowie das Verfahren zur automatisierten Anpassung von Prozessparametern gewährleistet, dass keinerlei Sicherheitsverletzungen und/oder Störungen auftreten, indem verschiedene relevante Prozessparameter, wie beispielsweise Geschwindigkeit und/oder Position und/oder Gelenkwinkel und/oder Achslage, während des beziehungsweise im laufenden Prozess kontinuierlich überwacht und vorausschauend, vor Eintreten eines Konfliktes, an gegebene Vorgabenwerte und/oder Parametervorgaben, auch sicherheitstechnischer Art, wie beispielsweise Geschwindigkeitsbeschränkungen, für die Handhabungsvorrichtung 11 verbotene Zonen und dergleichen, angepasst werden, so dass Konflikte und ein Eingriff des Sicherheitssystems 40 weitestgehend vermieden sind. Dies bedeutet aber, dass der eigentliche Prozess sehr vereinfacht auf das Wesentliche beschränkt und entkoppelt von diversen Parametervorgaben, insbesondere zellenbedingter und/oder umgebungsbedingter und/oder sicherheitstechnischer Art, realisiert und/oder konditioniert werden kann und damit auch bei nahezu gleichbleibender Arbeitsumgebung beziehungsweise Arbeitszelle beliebig modifizier und/oder änderbar und damit flexibel gestaltbar ist.

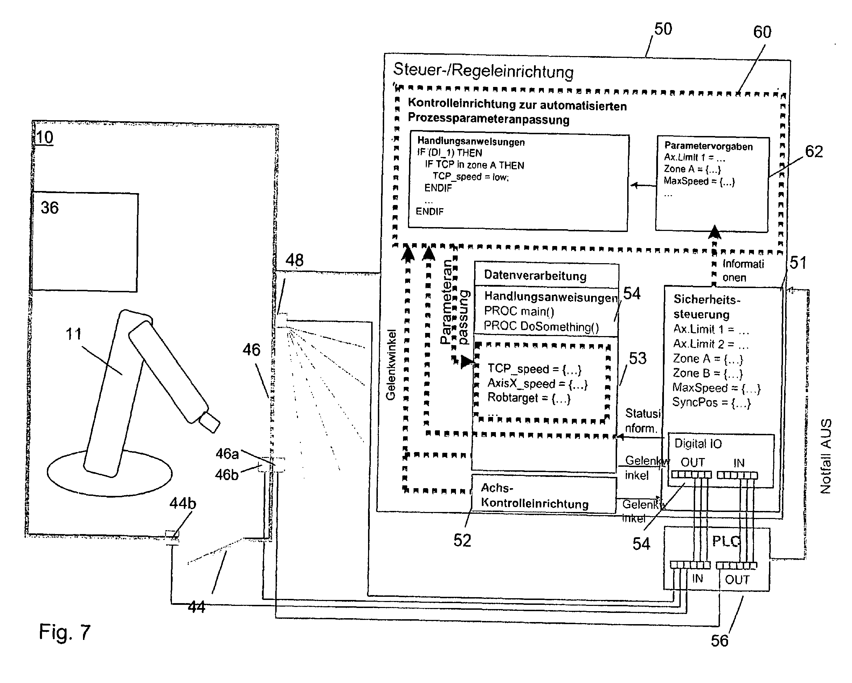

Ein beispielhaft ausgestaltetes System zur automatisierten Anpassung von Prozessparametern wenigstens einer Handhabungsvorrichtung 11 ist in Fig 7 im Rahmen einer Prozesssteuerung zur Umsetzung des im Wesentlichen aus Fig. 2 bekannten Arbeitsprozesses unter Verwendung einer Arbeitszelle 10 mit Handhabungsvorrichtung 11, maschineller Werkstückbearbeitung 36, einer Tür 44 mit Schalter 44b, einem Rolltor 46 mit Antrieb 46a mit Schalter 46b sowie einem Laser Scanner 48 zu dessen Umgebungsüberwachung gezeigt.

Die eingesetzte Prozesssteuerung umfasst Steuer-/Regeleinrichtung 50 mit Sicherheitssteuerung 51 sowie eine Achs-Kontrolleinrichtung 52 zur Erfassung und Kontrolle von Gelenkwinkel, Achs- und/oder Werkzeugposition und/oder Ausrichtung wenigstens einer Handhabungsvorrichtung 11. Die Steuer-/Regeleinrichtung 50 umfasst weiterhin eine Datenverarbeitungseinrichtung 53 welche im Zusammenwirken mit einem Datenspeicher (in Fig. 4 nicht explizit dargestellt) vorbestimmte Handlungsanweisungen 54 zur Ausführung und Umsetzung des jeweiligen Arbeitsprozesses 38 an die Handhabungsvorrichtung 11 übermittelt. Im Zusammenwirken mit der Datenverarbeitungseinrichtung 53 sowie der Achsen-Kontrolleinrichtung 52 werden mittels der Sicherheitssteuerung 51 an vorbestimmten Synchronisations-Positionen die jeweils mittels Datenverarbeitungseinrichtung 53 und der Achsen-Kontrolleinrichtung 52 ermittelten Gelenk- und/oder Achswinkel miteinander verglichen und/oder abgeglichen und damit die jeweilige Position und Ausrichtung der Handhabungsvorrichtung 11 überprüft und gegebenenfalls korrigiert. Werden dabei durch die Sicherheitssteuerung 51 vorgegebene Grenzwerte einzelner Prozessparameter und/oder Prozessvorgaben und/oder Bestimmungen, insbesondere sicherheitsspezifische Bestimmungen, für bestimmte Bereiche und/oder Zonen der jeweiligen Arbeitsumgebung, insbesondere der Arbeitszelle 10, überschritten (Obergrenzen) oder unterschritten (Untergrenzen), so löst die Sicherheitssteuerung 51 im Zusammenwirken mit einer Speicherprogrammierbaren Steuerung (SPS) und/oder eines PLC's 56 eine Notfallabschaltung der Steuer-/Regeleinrichtung 50 beziehungsweise der Handhabungsvorrichtung 11 aus. Weiterhin kann der PLC 56 mit verschiedenen Überwachungseinrichtungen, wie beispielsweise Endschaltern, Lichtschranken zusammenwirken, um zusätzliche Umgebungsinformationen abzurufen und auszuwerten. So kann vorgabenabhängig eine Notafallabschaltung beispielsweise auch schon dann ausgelöst werden, wenn die Tür 44 zur Arbeitszelle 10 geöffnet ist was durch den Schalter 44b erfassbar ist, oder wenn sich ein Mensch im Erfassungsbereich des Laser Scanner 48 aufhält. Letztlich eine Abschaltung zu vermeiden und dennoch eine flexible und/oder variable, änderbare Prozessgestaltung zu ermöglichen, ist weiterhin ein System zur automatisierten Anpassung von Prozessparametern wenigstens einer Handhabungsvorrichtung 11 vorgesehen, welches mit der Steuer-/Regeleinrichtung 50 mit Sicherheitssteuerung 51 zur Überwachung und/oder Steuerung und/oder Regelung der wenigstens einen Handhabungsvorrichtung 11 zusammenwirkt und in diese integriert ist. Das System umfasst wenigstens eine Kontrolleinrichtung 60, welche eine selektive Überwachung wenigstens eine Prozessparameters, beispielsweise der Geschwindigkeit und/oder der Position und/oder der Gelenkwinkel und/oder der Synchronisationsposition, durchführt und/oder im Bedarfsfall, ins-besondere bei drohendem Verstoß oder drohender Verletzung von Prozessvorgaben, wie beispielsweise einzuhaltenden Grenzwerten, und/oder Sicherheitsbestimmungen, vorgaben- und/oder umgebungsabhängig und/oder regelbasiert im Zusammenwirken mit der wenigstens einen Steuer-/Regeleinrichtung 50 wenigstens einen Prozessparameter der wenigstens einen Handhabungsvorrichtung 11 automatisiert vorausschauend anpasst, wobei umgebungs- und/oder sicherheitsspezifische Vorgaben und/oder Bestimmungen auch unabhängig von der Art des jeweiligen Arbeitsprozesses eingehalten und/oder umgesetzt sind. Das Zusammenwirken von Steuer-/Regeleinrichtung 50 und Kontrolleinrichtung 60 besteht im wesentlichen darin, dass der Datenverarbeitungseinrichtung 53 der Steuer-/Regeleinrichtung 50 angepasste Parameterwerte, insbesondere in Form entsprechender Handlungsanweisungen, zur Umsetzung für den Prozess übermittelt und/oder aufgeprägt werden. Darüber hinaus überwacht und/oder erfasst die Kontrolleinrichtung 60 im Zugriff, insbesondere Lesezugriff, auf die Sicherheitssteuerung 51 und/oder die Achsen-Kontrolleinrichtung 52 und damit auch in der Sicherheitssteuerung 51 erfasste Parametervorgaben 62 und/oder Bestimmungen. und/oder Umgebungsbedingungen, welche neben dem Zellenaufbau auch Sensor und/oder Überwachungs- sowie Prozessparameter und Statusinformationen der wenigstens einen Handhabungsvorrichtung 11, aber auch von eingesetzten Betriebsmitteln, umfassen können. Die Überwachung kann dabei kontinuierlich durchgeführt werden, so dass auch Änderungsinformationen umgehend erkannt und erfasst werden können. Im Zugriff auf die Datenverarbeitungseinrichtung 53 und Achs-Kontrolleinrichtung 52 überwacht und/oder erfasst die Kontrolleinrichtung 60 insbesondere Gelenkwinkel und/oder Drehwinkel und/oder Aschslagen wenigstens einer Handhabungsvorrichtung 11 beziehungsweise eines Werkzeuges. Auf diese Weise ist es der Kontrolleinrichtung 60 ermöglicht eine Bewegungs- und/oder Positionskontrolle wenigstens einer Handhabungsvorrichtung 11 durchzuführen. In Kenntnis von Position und/oder Bewegung der wenigstens einen Handhabungsvorrichtung 11 sowie von Status-/Umgebungsinformationen und/oder Prozessparameter und/oder Parametervorgaben ist die Kontrolleinrichtung 60 in die Lage versetzt mögliche Konfliktsituationen, insbesondere eine drohende Verletzung beziehungsweise Missachtung von Parametervorgaben und/oder Bestimmungen zu erkennen und rechtzeitig im voraus den betroffenen Parameter im Zusammenwirken mit der Steuer-/Regeleinrichtung 50 dahingehend anzupassen, das heißt wenigstens eine entsprechende Korrekturanweisung und/oder Handlungsanweisung oder wenigstens einen entsprechenden Korrekturwert zu bestimmen und an die Steuer-/Regeleinrichtung 50, insbesondere deren Datenverarbeitungseinrichtung 53, zur Umsetzung zu übermitteln, dass der drohende Konflikt und letztlich eine Abschaltung beziehungsweise Prozessunterbrechung vermieden ist.

Darüber hinaus ist auch vorstellbar mehrere Handhabungsvorrichtungen 11 innerhalb einer Arbeitsumgebung beziehungsweise Arbeitszelle einzusetzen, wobei bei der Parameteranpassung dann zusätzlich auch Statusinformationen, insbesondere Positions- und/oder Bewegungsinformationen, sowie Prozessvorgaben und/oder Bestimmungen hinsichtlich der jeweils übrigen Handhabungsvorrichtungen zu berücksichtigen und/oder zu erfassen und/oder zu verarbeiten sind. Um den Arbeits- beziehungsweise Verarbeitungsaufwand für eine einzelne Kontrolleinrichtung 60 in Grenzen zu Halten und zu beschränken, könnten systemgemäß auch vorteilhaft mehrere Kontrolleinrichtungen 60 vorgesehen sein, beispielsweise für jede im Prozess eingesetzte Handhabungsvorrichtung 11 jeweils eine Kontrolleinrichtung 60 welche sowohl untereinander als auch mit Steuer-/Regeleinrichtung 50 zusammenwirken.

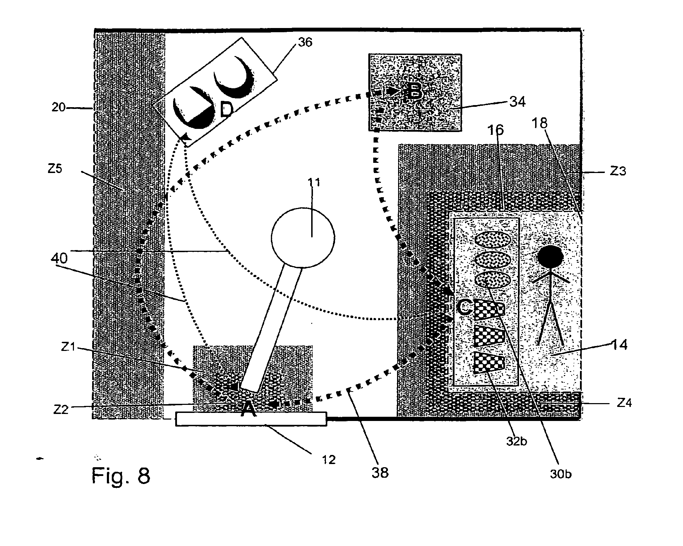

In Fig. 8 ist ein beispielhafter Prozessablauf nach einem Verfahren zur automatisierten Anpassung von Prozessparametern wenigstens einer Handhabungsvorrichtung gezeigt.

Zur Ausführung ist dabei eine Prozesssteuerung nach Fig. 7 mit einem System zur automatisierten Anpassung von Prozessparametern wenigstens einer Handhabungsvorrichtung 11 eingesetzt.

Dem Verfahren ist eine Arbeitszelle 10 gemäß Fig. 2 inklusive der entsprechender Prozessvorgaben und/oder Bestimmungen, insbesondere sicherheitstechnischer Art, zu Grunde gelegt. Die zur eigentlichen Prozessumsetzung gemäß Fig. 2 erforderlichen Handlungsanweisungen der Steuer-/Regeleinrichtung 50 und/oder Datenverarbeitungseinrichtung 53 an die jeweilige Handhabungsvorrichtung 11 in Form von Programmcodemittel und damit auch die eigentliche Prozessarchitektur sind gegenüber dem Beispiel nach Fig. 5 deutlich vereinfacht und reduziert und beschränken sich, wie nachfolgend dargelegt, lediglich noch auf grundlegende Prozesshandlungen und Anweisungen wie Bewegung von Punkt 1 nach Punkt 2, Aufnehmen oder Ablegen eines Werkstückes, Bearbeiten eines Werkstückes sowie öffnen oder schließen einer Pforte und dergleichen. Weitergehende Parametervorgaben, insbesondere sicherheitstechnischer Art, sowie die eigentliche Arbeitsumgebung und/oder jeweilige Zellenaufbau sind nicht berücksichtigt und/oder nicht umfasst. Damit sind die eigentlichen Prozesshandlungen von der jeweiligen Arbeitsumgebung beziehungsweise Zellenaufbau entkoppelt.

Beispielhafte Handlungsanweisungen der Datenverarbeitungseinrichtung 53 zur Prozessausführung:

```
 //Initial state: robot at A, gate open
 WHILE true DO
 pick up work piece;
 close gate;
 move to B;
 process work piece;
 move to C;
 put down work piece;
 IF next work piece NOT same as current
 move to D;
 change tool;
 ENDIF
 move to A;
 open gate;
 ENDWHILE
```

Gemäß vorgenannter Handlungsanweisungen weist der vorbeschriebenen Prozess nachfolgendes Handlungsmuster auf:

Der Prozess startet an Station A, falls die Pforte 12, insbesondere ein Rolltor, geöffnet ist. Befindet sich die Handhabungsvorrichtung 11, insbesondere der Roboter am Ausgangspunkt A und ist das Tor geöffnet (Ausgangssituation), so wird ein erstes Werkstück 30a aufgenommen, dann die Pforte 12 geschlossen, dann eine Bewegung der Handhabungsvorrichtung 11 von Station A nach B ausgeführt, das aufgenommene Werkstück bei Station B zu bearbeitet, nach der Bearbeitung mit dem bearbeitenden Werkstück 30b eine Bewegung von Station B nach C ausgeführt und bei Station C das Werkstück 30b niedergelegt. Bevor nun das nächste Werkstück 30a, 32a aufgenommen werden kann gilt es zu prüfen ob das nachfolgende Werkstück dem vorherigen entspricht oder nicht, demgemäß ergeben sich zwei Alternativen.
1. Das nächste zu handhabende, zweite Werkstück 32a unterscheidet sich vom vorausgehenden ersten Werkstück 30a, so dass zu dessen Handhabung zunächst ein Werkzeugwechsel erforderlich ist. Dementsprechend bewegt sich die Handhabungsvorrichtung 11 zunächst von Station C nach D und führt einen Werkzeugwechsel durch.
3. Das nächste zu handhabende, zweite Werkstück 30a ist identisch mit dem vorherigen Werkstück, so dass zu dessen Handhabung kein Werkzeugwechsel erforderlich ist.

Ausgehend von Station D oder C bewegt sich die Handhabungsvorrichtung 11 nun zum Ausgangspunkt A zurück und öffne1 die Pforte 12, um beispielsweise das nächste Werkstück 30a, 30b aufzunehmen.

Weitere Angaben, beispielsweise betreffend die verschiedenen Zonen Z1 bis Z5 und die darin zulässigen Geschwindigkeiten, werden an dieser Stelle nicht mehr von der Steuer-/Regeleinrichtung 50 beziehungsweise deren Datenverarbeitungseinrichtung 53 zur Ausführung des Prozesses benötigt und/oder berücksichtigt.

Derartige Prozess- und/oder Parametervorgaben sowie deren Einhaltung obliegen nunmehr der Zuständigkeit des entsprechenden Systems zur automatisierten Anpassung von Prozessparametern und insbesondere dessen Kontrolleinrichtung 60, welche im Zusammenwirken mit der Steuer-/Regeleinrichtung 50 der Handhabungsvorrichtung 11 und/oder des jeweiligen Prozesses automatisiert eine vorausschauende Anpassung der jeweiligen Prozessparameter vornimmt, derart dass insbesondere die für die verschiedenen Zonen bestehenden Geschwindigkeitsvorgaben und/oder Haltepositionen berücksichtigt und eingehalten werden.

Die zur Geschwindigkeitsanpassung beispielhaft eingesetzten Handlungsanweisungen und/oder Regelschleifen in Form von Programmcodemitteln lauten:

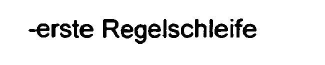

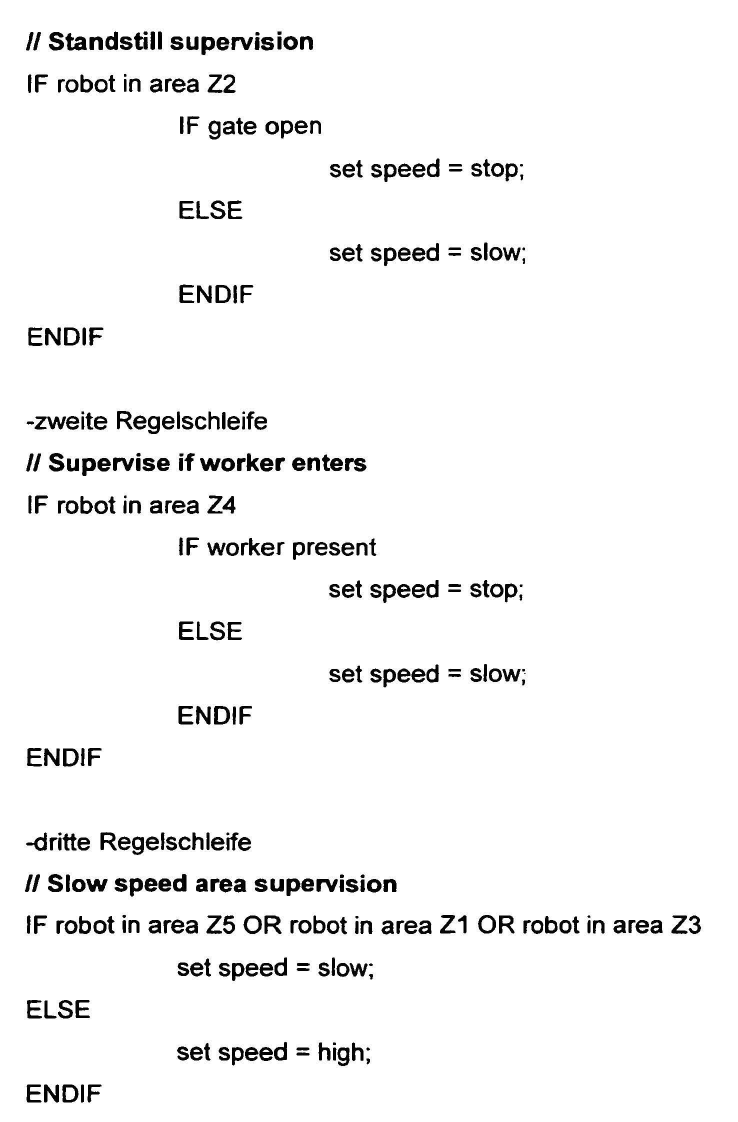

Wobei in der ersten Regelschleife die Handlungsanweisungen enthalten ist, dass die Handhabungsvorrichtung 11 wenn sie sich in Zone Z2 befindet, verharren beziehungsweise stoppen soll, falls die Pforte 12 geöffnet ist. Ist die Pforte jedoch geschlossen so soll sie sich in Zone Z2 mit langsamer Geschwindigkeit bewegen.

Die zweite Regelschleife umfasst die Anweisung, dass die Handhabungsvorrichtung wenn sie sich in Zone Z4 befindet, verharren beziehungsweise stoppen soll, falls sich ein Mensch im manuellen Arbeitsbereich 14 aufhält, was durch die verschiedenen Lichtvorhänge und/oder Lichtschranken erfassbar ist. Ist kein Mensch anwesend, so soll sie sich in Zone Z4 mit langsamer Geschwindigkeit bewegen.

Die dritte Regelschleife beinhaltet die Anweisung, dass die Handhabungsvorrichtung 11 in den Zonen Z5, Z1 oder Z3 mit langsamer Geschwindigkeit bewegen soll und sich im Übrigen mit schneller Geschwindigkeit bewegen soll.

Die Einhaltung und/oder Einstellung der für die verschiedenen Zonen unter bestimmten Bedingungen geforderten Geschwindigkeit der Handhabungsvorrichtung 11 oder auch ein Stopp der Handhabungsvorrichtung werden damit verfahrensgemäß durch das System zur automatisierten Anpassung von Prozessparametern und/oder seiner Kontrolleinrichtung 60 im Zusammenwirken mit der Steuer-/Regeleinrichtung 50 des Prozesses und/oder der Handhabungsvorrichtung 11 bewirkt.

Dabei werden der Arbeitszellenäufbau sowie die in Abhängigkeit des Aufbaus vorgegebenen Prozessvorgaben berücksichtigt und/oder die relevanten Prozessparameter kontinuierlich und/oder positionsabhängig erfasst und/oder überwacht.

Durch die Entkopplung des eigentlichen Prozesses von der jeweiligen Arbeitsumgebung, insbesondere der jeweiligen Zelle, und den damit verbundenen Parametervorgaben und/oder Sicherheitsbestimmungen ist eine einfache Umgestaltung und/oder Änderung des eigentlichen Prozesses beziehungsweise Prozessablaufs möglich.

Auf diese Art und Weise lassen sich mit vergleichsweise geringem Aufwand unterschiedliche Prozesse im Wechsel in der gleichen Arbeitsumgebung beziehungsweise der gleichen Arbeitszelle ausführen.

## Patentansprüche

1. System zur automatisierten Anpassung von Prozessparametern wenigstens einer Handhabungsvorrichtung (11), welches mit wenigstens einer Steuer-/Regeleinrichtung (50), insbesondere mit einer Sicherheitssteuerung (51), zur Überwachung und/oder Steuerung und/oder Regelung der wenigstens einen Handhabungsvorrichtung (11) zusammenwirkt, wobei wenigstens eine Kontrolleinrichtung (60) vorgesehen ist, die wenigstens einen Prozessparameter der wenigstens einen Handhabungsvorrichtung (11) selektiv überwacht und im Bedarfsfall vorgaben- und/oder umgebungsabhängig und/oder regelbasiert im Zusammenwirken mit der wenigstens einen Steuer/Regeleinrichtung (50) automatisiert anpasst, wobei umgebungs-und/oder sicherheitsspezifische Vorgaben und/oder Bestimmungen auch unabhängig von der Art des jeweiligen Arbeitsprozesses eingehalten und/oder umgesetzt sind,
**dadurch gekennzeichnet, dass**
bei mehreren eingesetzten Handhabungsvorrichtungen (11) die Anpassung des wenigstens einen Prozessparameters wenigstens einer Handhabungsvorrichtung (11) auch in Abhängigkeit oder unter Berücksichtung von Position und/oder Ausrichtung und/oder Geschwindigkeit wenigsten einer anderen Handhabungsvorrichtung (11) bewirkt ist.

2. System nach einem der vorherigen Ansprüche, **dadurch gekennzeichnet**, wenigstens eine Schnittstelle vorgesehen ist, welche die Erfassung und/oder Übertragung vorbestimmter Prozessinformationen durch und/oder an die Steuer-/Regeleinrichtung (50) ermöglicht.

3. System nach Anspruch 1 oder 2, **dadurch gekennzeichnet, dass** die wenigstens eine Schnittstelle drahtlos, insbesondere als WLAN-, Bluetooth-, IR- oder GPRS-Schnittstelle, oder drahtgebunden, insbesondere als PCI-, SCSI-, Firewire, LAN-, Ethernet, USB- oder RS-232-Schnittstelle, oder auch als Feldbusschnittstelle, insbesondere als PROFIBUS- oder CAN-BUS-Schnittstelle, ausgebildet ist.

4. System nach einem der vorherigen Ansprüche, **dadurch gekennzeichnet, dass** die Kontrolleinrichtung (60) Positionsinformationen der wenigstens einen Handhabungsvorrichtung kontinuierlich oder zyklisch oder in wiederkehrenden Zeitintervallen kontinuierlich erfasst, auswertet und zur Parameterbestimmung und/oder Parameteranpassung einsetzt.

5. System nach Anspruch 4, **dadurch gekennzeichnet, dass** die Erfassung der Positionsinformationen im Zusammenwirken mit der Steuer-/Regeleinrichtung (50) und/oder der Sicherheitssteuerung (51), insbesondere durch Auslesen von Sensoren, Signalgebern, Endschaltern, sowie von Achslagen, Gelenkstellungen und/oder Strom-/Spannungswerten der Antriebseinheiten der jeweiligen Handhabungsvorrichtung (11) erfolgt.

6. System nach einem der vorherigen Ansprüche, **dadurch gekennzeichnet, dass** wenigstens ein Datenspeicher vorgesehen ist, auf dem Prozessinformationen und/oder Umgebungsinformationen und/oder Handlungsanweisungen, insbesondere als Programmcodemittel, für die Steuer-/Regeleinrichtung (50) und/oder die Kontrolleinrichtung (60) abrufbar und/oder ausführbar gespeichert sind.

7. System nach einem der vorherigen Ansprüche, **dadurch gekennzeichnet, dass** die Steuer-/Regeleinrichtung (50) wenigstens eine Datenverarbeitungseinrichtung (53) aufweist, welche mit wenigstens einem Datenspeicher mit Prozessinformationen und/oder Handlungsanweisungen zur Ausführung und/oder Umsetzung des jeweiligen Arbeitsprozesses zusammenwirkt.

8. System nach einem der vorherigen Ansprüche, **dadurch gekennzeichnet, dass** die Kontrolleinrichtung (60) in die Steuer-/Regeleinrichtung integrierbar ist.

9. System nach einem der Ansprüche 5 bis 8, **dadurch gekennzeichnet, dass** die jeweiligen Handlungsanweisungen und/oder Bewegungsmuster dabei allein durch den jeweiligen Arbeitsprozess bestimmt sind und/oder keinerlei umgebungsspezifische Vorgaben umfassen und/oder berücksichtigen.

10. System nach einem der vorherigen Ansprüche, **dadurch gekennzeichnet, dass** die Anpassung des wenigstens einen Prozessparameters der wenigstens einen Handhabungsvorrichtung (11) durch die Kontrolleinrichtung (60) dynamisch, das heißt auch bei sich ändernden Umgebungsbedingungen, wie insbesondere Änderungen von Schaltzuständen, sich ändernden Sensor- und/oder Positionsinformationen, insbesondere auch anderer Handhabungsvorrichtungen (11), erfolgt.

11. System nach einem der vorherigen Ansprüche, **dadurch gekennzeichnet, dass** Anpassung wenigstens eines Prozessparameters und damit die Änderung von einem Ist- auf einen Sollwert, umgebungs- und/oder vorgabenabhängig mittels einer stetigen Funktion, insbesondere mit einem linearen, parabolischen, exponentiellen, oder logarithmischen Verlauf, oder mittels einer Sprungfunktion bewirkt ist.

12. System nach einem der vorherigen Ansprüche, **dadurch gekennzeichnet, dass** durch die Kontrolleinrichtung (60) als wenigstens einen Prozessparameter die Geschwindigkeit und/oder wenigstens eine Geschwindigkeitskomponente und/oder die Orientierung und/oder die Ausrichtung und/oder die Position der wenigstens einen Handhabungsvorrichtung (11) und/oder ihres Werkzeuges anpassbar ist.

13. System nach einem der vorherigen Ansprüche, **dadurch gekennzeichnet, dass** die Anpassung des wenigstens einen Prozessparameters durch die Kontrolleinrichtung (60) online und/oder in Echtzeit, das heißt im laufenden Betrieb der Handhabungsvorrichtung (11) während der jeweiligen Prozessausführung, bewirkt ist.

14. System nach einem der vorherigen Ansprüche, **dadurch gekennzeichnet, dass** eine Sicherheitssteuerung (51), insbesondere eine übergeordnete Sicherheitseinrichtung vorgesehen ist, welche bei Verletzung vorbestimmter Sicherheitsregularien und/oder Abweichungen von Parametervorgaben außerhalb zulässiger Grenzwerte, eine Notfallabschaltung des Prozesses, insbesondere der wenigstens einen Handhabungsvorrichtung (11), bewirkt, wobei Kontrolleinrichtung (60) und Sicherheitseinrichtung (51) unabhängig voneinander agieren und sich nicht beeinflussen.

15. System nach einem der vorherigen Ansprüche, **dadurch gekennzeichnet, dass** als Handhabungsvorrichtung (11) wenigstens ein Industrieroboter mit mehreren, insbesondere sechs, Achsen und/oder Gelenken eingesetzt ist.

16. System nach einem der vorherigen Ansprüche, **dadurch gekennzeichnet, dass** die Kontrolleinrichtung (60) eine Datenverarbeitungseinrichtung, insbesondere einen Mikroprozessor und/oder SPS, und/oder einen Datenspeicher umfasst.

17. Prozesssteuerung zur Steuerung/Regelung wenigstens einer Handhabungsvorrichtung (11) zur Ausführung eines Arbeitsprozesses, welche eine Steuer-/Regeleinrichtung (50) und Sicherheitssteuerung (51) sowie ein System nach einem der vorherigen Ansprüche 1 bis 21 umfasst, **dadurch gekennzeichnet, dass** der Steuer-/Regeleinrichtung mit einem Planungswerkzeugs, insbesondere einem "motion planner", erstellte prozessspezifische Bewegungsmuster und/oder demgemäße Handlungsanweisungen für die wenigstens eine Handhabungsvorrichtung zur Umsetzung und/oder Ausführung übertragbar und/oder aufprägbar sind.

18. Prozesssteuerung nach Anspruch 17, **dadurch gekennzeichnet, dass** wenigstens eine Schnittstelle vorgesehen ist, welche die Erfassung und/oder Übertragung vorbestimmter Prozessinformationen durch und/oder an die Steuer-/Regeleinrichtung (50) und/oder die Erfassung sowie Verarbeitung von Sensor-und/oder Zustandsinformationen auch eingesetzter Betriebsmittel ermöglicht.

19. Prozesssteuerung nach Anspruch 18, **dadurch gekennzeichnet, dass** die wenigstens eine Schnittstelle drahtlos, insbesondere als WLAN-, Bluetooth-, IR-oder GPRS- Schnittstelle, oder drahtgebunden, insbesondere als PCI-, SCSI-, Firewire, LAN-, Ethernet, USB- oder RS-232-Schnittstelle, oder auch als Feldbusschnittstelle, insbesondere als PROFIBUS- oder CAN-BUS-Schnittstelle, ausgebildet ist.

20. Verfahren zur automatisierten Anpassung von Prozessparametern wenigstens einer Handhabungsvorrichtung (11), wobei im Zusammenwirken mit wenigstens einer Steuer-/Regeleinrichtung (50), insbesondere mit Sicherheitseinrichtung (51), zur Überwachung und/oder Steuerung und/oder Regelung wenigstens einer Handhabungsvorrichtung (11), mittels wenigstens einer Kontrolleinrichtung (60) wenigstens ein Prozessparameter selektiv überwacht wird und im Bedarfsfall vorgaben- und/oder umgebungsabhängig und/oder regelbasiert im Zusammenwirken mit der wenigstens einen Steuer-/Regeleinrichtung (11) automatisiert angepasst wird, wobei umgebungs-und/oder sicherheitsspezifische Vorgaben und/oder Bestimmungen auch unabhängig von der Art des jeweiligen Arbeitsprozesses eingehalten und/oder umgesetzt werden, dadurch gekennzeichet, dass bei Verwendung mehrer Handhabungsvorrichtungen (11) die Anpassung des wenigstens einen Prozesseparameters wenigstens einer Handhabungsvorrichtung (11) auche in Abhängigkeit beziehungsweise unter Berücksichtung von Position und/oder Ausrichtung und/oder Geschwindigkeit der jeweils anderen Handhabungsvorrichtungen durchgeführt wird.

21. Verfahren nach Anspruch 20, **dadurch gekennzeichnet, dass** die Anpassung des wenigstens einen Prozessparameters vorausschauend durchgeführt wird.

22. Verfahren nach Anspruch 20 oder Anspruch 21, **dadurch gekennzeichnet, dass** eine Erfassung und/oder Bestimmung von Umgebungsinformationen, insbesondere von Sensor- und/oder Schalt- und/oder Zustandsinformationen eingesetzter Betriebsmittel und/oder Überwachungseinrichtungen durchgeführt wird und/oder die ermittelten Informationen für eine Prozessparameteranpassung ausgewertet werden.

23. Verfahren nach einem der vorherigen Ansprüche 20 bis 22, **dadurch gekennzeichnet, dass** als Arbeitsumgebung der Aufbau und/oder die Struktur wenigstens einer Arbeitszelle, in welcher eine oder mehrere Handhabungsvorrichtungen (11) anordenbar sind, erfasst und/oder zugrunde gelegt wird.

24. Verfahren nach einem der Ansprüche 20 bis 23, **dadurch gekennzeichnet, dass** die Anpassung des wenigstens einen Prozessparameters der wenigstens einen Handhabungsvorrichtung (11) in Abhängigkeit von Position und/oder Ausrichtung der wenigstens einen Handhabungsvorrichtung (11) durchgeführt wird.

25. Verfahren nach einem der Ansprüche 20 bis 25, **dadurch gekennzeichnet, dass** eine Erfassung und/oder Übertragung vorbestimmter Prozessinformationen durch und/oder an die Steuer-/Regeleinrichtung (50) durchgeführt wird, wobei die Erfassung und/oder Übertragung dabei drahtlos, insbesondere mittels WLAN, Bluetooth, IR oder GPRS, oder drahtgebunden, insbesondere mittels PCI-, SCSI-, Firewire, LAN-, Ethernet, USB- oder RS-232-Bus oder PROFIBUS, CAN-BUS, Fieldbus-Foundation oder Modbus durchführbar ist.

26. Verfahren nach einem der Ansprüche 20 bis 26, **dadurch gekennzeichnet, dass** Positionsinformationen kontinuierlich oder zyklisch, oder in wiederkehrenden Zeitintervallen kontinuierlich erfasst, ausgewertet und zur Parameterbestimmung und/oder Parameteranpassung eingesetzt werden.

27. Verfahren nach einem der Anspruch 27, **dadurch gekennzeichnet, dass** die Erfassung der Positionsinformationen im Zusammenwirken mit der Steuer-/Regeleinrichtung (50) und/oder der Sicherheitssteuerung (51) und/oder durch Auslesen von Sensoren, Signalgebern, Endschaltern, sowie von Achslagen, Gelenkstellungen, Strom-/Spannungswerten der Antriebseinheiten der jeweiligen Handhabungsvorrichtung (11), durchgeführt wird.

28. Verfahren nach einem der Ansprüche 20 bis 28, **dadurch gekennzeichnet, dass** Prozessinformationen und/oder Umgebungsinformationen und/oder Handlungsanweisungen, insbesondere in Form von Programmcodemittel sowohl für die Steuer-/Regeleinrichtung (50) als auch die Kontrolleinrichtung (60), abrufbar und/oder ausführbar auf wenigstens einem Datenspeicher gespeichert werden.

29. Verfahren nach einem der Ansprüche 26 bis 29, **dadurch gekennzeichnet, dass** mit einem Planungswerkzeug, insbesondere einem "motion planner", erstellte prozessspezifische Bewegungsmuster und/oder demgemäße Handlungsanweisungen für wenigstens eine Handhabungsvorrichtung (11) verfahrensvorbereitend zur Umsetzung und/oder Ausführung an die jeweilige Steuer-/Regeleinrichtung (50) übertragen und/oder ausgeführt werden.

30. Verfahren nach Anspruch 30, **dadurch gekennzeichnet, dass** die jeweiligen Handlungsanweisungen und/oder Bewegungsmuster dabei allein durch den jeweiligen Arbeitsprozess bestimmt werden und/oder keinerlei umgebungsspezifische Vorgaben berücksichtigt und/oder umfasst werden.

31. Verfahren nach einem der Ansprüche 26 bis 31, **dadurch gekennzeichnet, dass** die Anpassung des wenigstens einen Prozessparameters der wenigstens einen Handhabungsvorrichtung (11) dynamisch, das heißt auch bei sich ändernden Umgebungsbedingungen, wie insbesondre Änderungen von Schaltzuständen, sich ändernden Sensor- und/oder Positionsinformationen, insbesondere auch anderer Handhabungsvorrichtungen (11), und dergleichen mehr durchgeführt wird.

32. Verfahren nach einem der Ansprüche 26 bis 32, **dadurch gekennzeichnet, dass** die Anpassung des wenigstens einen Prozessparameters, das heißt die Änderung von einem Ist- auf einen Sollwert, umgebungs- und/oder vorgabenabhängig mittels einer stetigen Funktion, insbesondere mit einem linearen, parabolischen, exponentiellen, oder logarithmischen Verlauf, oder mittels einer Sprungfunktion durchgeführt wird.

33. Verfahren nach einem der Ansprüche 26 oder 33, **dadurch gekennzeichnet, dass** als wenigstens ein Prozessparameter die Geschwindigkeit und/oder wenigstens eine Geschwindigkeitskomponente und/oder die Orientierung und/oder die Ausrichtung und/oder die Position der wenigstens einen Handhabungsvorrichtung (11) und/oder ihres Werkzeuges anpasst wird.

34. Verfahren nach einem der Ansprüche 26 bis 34, **dadurch gekennzeichnet, dass** die Anpassung des wenigstens einen Prozessparameters online und/oder in Echtzeit, das heißt im laufenden Betrieb der Handhabungsvorrichtung (11) während der jeweiligen Prozessausführung, durchgeführt wird.

## Claims

1. System for the automated adaptation of process parameters of at least one handling device (11), which system interacts with at least one control/regulation device (50), in particular with a safety controller (51), for monitoring and/or controlling and/or regulating the at least one handling device (11), provision being made of at least one supervision device (60) which selectively monitors at least one process parameter of the at least one handling device (11) and, if necessary, adapts it in an automated manner on the basis of specifications and/or the environment and/or in a rule-based manner in interaction with the at least one control/regulation device (50), environment-specific and/or safety-specific specifications and/or regulations also being complied with and/or implemented irrespective of the type of the respective working process,
**characterized in that**, if a plurality of handling devices (11) are used, the at least one process parameter of at least one handling device (11) is also adapted on the basis of or taking into account the position and/or alignment and/or speed of at least one other handling device (11).

2. System according to Claim 1, **characterized in that** provision is made of at least one interface which enables predetermined process information to be detected by and/or transmitted to the control/regulation device (50).

3. System according to Claim 1 or 2, **characterized in that** the at least one interface is wireless, in particular is in the form of a WLAN, Bluetooth, IR or GPRS interface, or is wired, in particular is in the form of a PCI, SCSI, Firewire, LAN, Ethernet, USB or RS-232 interface, or else is in the form of a field bus interface, in particular in the form of a PROFIBUS or CAN bus interface.

4. System according to one of the preceding claims, **characterized in that** the supervision device (60) detects position information for the at least one handling device continuously or cyclically or continuously in recurring intervals of time, evaluates said information and uses it to determine and/or adapt parameters.

5. System according to Claim 4, **characterized in that** the position information is detected in interaction with the control/regulation device (50) and/or the safety controller (51), in particular by reading sensors, signal transmitters, limit switches as well as axle bearings, articulation positions and/or current/voltage values of the drive units for the respective handling device (11).

6. System according to one of the preceding claims, **characterized in that** provision is made of at least one data memory in which process information and/or ambient information and/or instructions is/are stored, in particular in the form of program code means, for the control/regulation device (50) and/or the supervision device (60) in such a manner that it/they can be retrieved and/or executed.

7. System according to one of the preceding claims, **characterized in that** the control/regulation device (50) has at least one data processing device (53) which interacts with at least one data memory containing process information and/or instructions for carrying out and/or implementing the respective working process.

8. System according to one of the preceding claims, **characterized in that** the supervision device (60) can be integrated in the control/regulation device.

9. System according to one of Claims 5 to 8, **characterized in that** the respective instructions and/or movement patterns are determined in this case solely by the respective working process and/or do not comprise and/or take into account any environment-specific specifications.

10. System according to one of the preceding claims, **characterized in that** the supervision device (60) adapts the at least one process parameter of the at least one handling device (11) dynamically, that is to say even in the case of changing ambient conditions such as, in particular, changes in switching states, changing sensor and/or position information, in particular of other handling devices (11) as well.

11. System according to one of the preceding claims, **characterized in that** the adaptation of at least one process parameter and thus the change from an actual value to a desired value are effected on the basis of the environment and/or specifications using a continuous function, in particular having a linear, parabolic, exponential or logarithmic profile, or using a step function.

12. System according to one of the preceding claims, **characterized in that** the supervision device (60) can adapt, as at least one process parameter, the speed and/or at least one speed component and/or the orientation and/or the alignment and/or the position of the at least one handling device (11) and/or the tool of the latter.

13. System according to one of the preceding claims, **characterized in that** the supervision device (60) adapts the at least one process parameter online and/or in real time, that is to say during continuous operation of the handling device (11) during the respective process execution.

14. System according to one of the preceding claims, **characterized in that** provision is made of a safety controller (51), in particular a superordinate safety device, which effects an emergency shutdown of the process, in particular of the at least one handling device (11), if predetermined safety rules are violated and/or there are deviations from parameter specifications outside permissible limit values, the supervision device (60) and the safety device (51) acting independently of one another and not influencing one another.

15. System according to one of the preceding claims, **characterized in that** at least one industrial robot having a plurality of, in particular six, axles and/or articulations is used as the handling device (11).

16. System according to one of the preceding claims, **characterized in that** the supervision device (60) comprises a data processing device, in particular a microprocessor and/or PLC, and/or a data memory.

17. Process controller for controlling/regulating at least one handling device (11) for carrying out a working process, which process controller comprises a control/regulation device (50) and a safety controller (51) as well as a system according to one of the preceding Claims 1 to 16, **characterized in that** process-specific movement patterns created with a planning tool, in particular a "motion planner", and/or corresponding instructions for the at least one handling device can be transmitted to and/or impressed on the control/regulation device for implementation and/or execution.

18. Process controller according to Claim 17, **characterized in that** provision is made of at least one interface which enables predetermined process information to be detected by and/or transmitted to the control/regulation device (50) and/or enables sensor and/or state information of operating means used as well to be detected and processed.

19. Process controller according to Claim 18, **characterized in that** the at least one interface is wireless, in particular is in the form of a WLAN, Bluetooth, IR or GPRS interface, or is wired, in particular is in the form of a PCI, SCSI, Firewire, LAN, Ethernet, USB or RS-232 interface, or else is in the form of a field bus interface, in particular in the form of a PROFIBUS or CAN bus interface.

20. Method for the automated adaptation of process parameters of at least one handling device (11), in which case, in interaction with at least one control/regulation device (50), in particular with a safety device (51), for monitoring and/or controlling and regulating the at least one handling device (11), at least one supervision device (60) is used to selectively monitor at least one process parameter and, if necessary, to adapt said process parameter in an automated manner on the basis of specifications and/or the environment and/or in a rule-based manner in interaction with the at least one control/regulation device (50), environment-specific and/or safety-specific specifications and/or regulations also being complied with and/or implemented irrespective of the type of the respective working process, **characterized in that**, if a plurality of handling devices (11) are used, the at least one process parameter of at least one handling device (11) is also adapted on the basis of or taking into account the position and/or alignment and/or speed of the respective other handling device.

21. Method according to Claim 20, **characterized in that** the at least one process parameter is adapted in an anticipatory manner.

22. Method according to Claim 20 or 21, **characterized in that** ambient information, in particular sensor and/or switching and/or state information of operating means and/or monitoring devices used, is detected and/or determined, and/or the information determined is evaluated in order to adapt a process parameter.

23. Method according to one of the preceding Claims 20 to 22, **characterized in that** the design and/or the structure of at least one working cell in which one or more handling devices (11) can be arranged is/are detected and/or used as a basis as the working environment.

24. Method according to one of Claims 20 to 23, **characterized in that** the at least one process parameter of the at least one handling device (11) is adapted on the basis of the position and/or alignment of the at least one handling device (11).

25. Method according to one of Claims 20 to 24, **characterized in that** predetermined process information is detected by and/or transmitted to the control/regulation device (50), the detection and/or transmission being able to be carried out in a wireless manner in this case, in particular using WLAN, Bluetooth, IR or GPRS, or in a wired manner, in particular using a PCI, SCSI, Firewire, LAN, Ethernet, USB or RS-232 bus, or else PROFIBUS, CAN bus, field bus foundation or Modbus.

26. Method according to one of Claims 20 to 25, **characterized in that** position information is detected continuously or cyclically or continuously in recurring intervals of time, is evaluated and is used to determine and/or adapt parameters.

27. Method according to Claim 26, **characterized in that** the position information is detected in interaction with the control/regulation device (50) and/or the safety controller (51) and/or by reading sensors, signal transmitters, limit switches as well as axle positions, articulation positions and/or current/voltage values of the drive units for the respective handling device (11).

28. Method according to one of Claims 20 to 27, **characterized in that** process information and/or ambient information and/or instructions is/are stored in at least one data memory, in particular in the form of program code means, both for the control/regulation device (50) and for the supervision device (60) in such a manner that it/they can be retrieved and/or executed.

29. Method according to one of Claims 25 to 28, **characterized in that**, in order to prepare for the method, process-specific movement patterns created with a planning tool, in particular a "motion planner", and/or corresponding instructions for at least one handling device (11) are transmitted to the respective control/regulation device (50) for implementation and/or execution and/or are executed.

30. Method according to Claim 29, **characterized in that** the respective instructions and/or movement patterns are determined in this case solely by the respective working process and/or no environment-specific specifications are taken into account and/or included.

31. Method according to one of Claims 25 to 30, **characterized in that** the at least one process parameter of the at least one handling device (11) is adapted dynamically, that is to say even in the case of changing ambient conditions such as, in particular, changes in switching states, changing sensor and/or position information, in particular of other handling devices (11) and the like as well.

32. Method according to one of Claims 25 to 31, **characterized in that** the adaptation of at least one process parameter, that is to say the change from an actual value to a desired value, is effected on the basis of the environment and/or specifications using a continuous function, in particular having a linear, parabolic, exponential or logarithmic profile, or using a step function.

33. Method according to either of Claims 25 and 32, **characterized in that** the speed and/or at least one speed component and/or the orientation and/or the alignment and/or the position of the at least one handling device (11) and/or the tool of the latter is/are adapted as at least one process parameter.

34. Method according to one of Claims 25 to 33, **characterized in that** the at least one process parameter is adapted online and/or in real time, that is to say during continuous operation of the handling device (11) during the respective process execution.

## Revendications

1. Système pour l'ajustement automatisé de paramètres de processus d'au moins un dispositif de manipulation (11), lequel système coopère avec au moins un moyen de commande/régulation (50), en particulier avec un système de commande de sécurité (51), pour la surveillance et/ou la commande et/ou la régulation de l'au moins un dispositif de manipulation (11), dans lequel il est prévu au moins un moyen de contrôle (60) qui surveille sélectivement au moins un paramètre de processus de l'au moins un dispositif de manipulation (11) et si besoin l'ajuste de manière automatisée en coopération avec l'au moins un moyen de commande/régulation (50) en fonction de consignes et/ou de l'environnement et/ou sur la base de règles, dans lequel des consignes et/ou des instructions spécifiques de l'environnement et/ou de la sécurité sont également fixées et/ou mises en oeuvre indépendamment du type du processus de travail respectif,
**caractérisé en ce que**, lors de l'utilisation d'une pluralité de dispositifs de manipulation (11), l'ajustement de l'au moins un paramètre de processus d'au moins un dispositif de manipulation (11) est également provoqué en fonction ou en tenant compte de la position et/ou de la direction et/ou de la vitesse d'au moins un autre dispositif de manipulation (11).

2. Système selon la revendication 1, **caractérisé en ce qu'**il est prévu au moins une interface permettant la détection et/ou la transmission d'informations de processus prédéterminées par l'intermédiaire et/ou à destination du moyen de commande/régulation (50).

3. Système selon la revendication 1 ou 2, **caractérisé en ce que** l'au moins une interface est réalisée sous la forme d'une interface sans fil, en particulier sous la forme d'une interface WLAN, Bluetooth, IR ou GPRS, ou connectée par fil, en particulier sous la forme d'une interface PCI, SCSI, Firewire, LAN, Ethernet, USB ou RS-232, ou également sous la forme d'une interface de bus de terrain, en particulier sous la forme d'une interface PROFIBUS ou CAN-BUS.

4. Système selon l'une quelconque des revendications précédentes, **caractérisé en ce que** le moyen de contrôle (60) détecte, évalue et utilise pour la détermination de paramètres et/ou l'ajustement de paramètres des informations de position de l'au moins un dispositif de manipulation de manière continue ou cyclique ou de manière continue au cours d'intervalles répétitifs.

5. Système selon la revendication 4, **caractérisé en ce que** la détection des informations de position s'effectue en coopération avec le moyen de commande/régulation (50) et/ou le système de commande de sécurité (51), en particulier par lecture de capteurs, de générateurs de signaux, de commutateurs de fin de course, ainsi que de positions d'axes, de positions d'articulations et/ou de valeurs de courant/tension des unités d'entraînement du dispositif de manipulation (11) respectif.

6. Système selon l'une quelconque des revendications précédentes, **caractérisé en ce qu'**il est prévu au moins une mémoire de données dans laquelle sont mémorisées des informations de processus et/ou des informations d'environnement et/ou des instructions de manipulation, en particulier sous la forme de moyens de codage de programmes destinés au moyen de commande/régulation (50) et/ou au moyen de contrôle (60) de manière à ce qu'elles puissent être appelées et/ou exécutées.

7. Système selon l'une quelconque des revendications précédentes, **caractérisé en ce que** le moyen de commande/régulation (50) comprend au moins un moyen de traitement de données (53) qui coopère avec au moins une mémoire de données comportant des informations de processus et/ou des instructions de manipulation destinées à l'exécution et/ou à la mise en oeuvre du processus de travail respectif.

8. Système selon l'une quelconque des revendications précédentes, **caractérisé en ce que** le moyen de contrôle (60) peut intégré au moyen de commande/régulation.

9. Système selon l'une quelconque des revendications 5 à 8, **caractérisé en ce que** les instructions de manipulation et/ou les motifs de mouvement respectifs sont uniquement déterminés par le processus de travail respectif et/ou ne comprennent et/ou ne prennent en compte aucune consigne spécifique de l'environnement.

10. Système selon l'une quelconque des revendications précédentes, **caractérisé en ce que** l'ajustement de l'au moins un paramètre de processus de l'au moins un dispositif de manipulation (11) s'effectue de manière dynamique par l'intermédiaire du moyen de contrôle (60), c'est-à-dire également dans le cas de conditions ambiantes se modifiant, en particulier comme des modifications d'états de commutation, des informations de capteurs et/ou de position se modifiant, en particulier également d'autres dispositifs de manipulation (11).

11. Système selon l'une quelconque des revendications précédentes, **caractérisé en ce que** l'ajustement d'au moins un paramètre de processus et par conséquent, la modification d'une valeur réelle en une valeur nominale, est provoqué en fonction de l'environnement et/ou de consignes au moyen d'une fonction continue, ayant en particulier une forme linéaire, parabolique, exponentielle ou logarithmique, ou au moyen d'une fonction échelon.

12. Système selon l'une quelconque des revendications précédentes, **caractérisé en ce qu'**en tant qu'au moins un paramètre de processus, la vitesse et/ou au moins une composante de vitesse et/ou l'orientation et/ou la direction et/ou la position de l'au moins un dispositif de manipulation (11) et/ou de son outil peut être ajustée par l'intermédiaire du moyen de contrôle (60).

13. Système selon l'une quelconque des revendications précédentes, **caractérisé en ce que** l'ajustement de l'au moins un paramètre de processus est provoqué par l'intermédiaire du moyen de contrôle (60) en ligne et/ou en temps réel, c'est-à-dire au cours du fonctionnement du dispositif de manipulation (11) pendant l'exécution du processus respectif.

14. Système selon l'une quelconque des revendications précédentes, **caractérisé en ce qu'**il est prévu un système de commande de sécurité (51), en particulier un système de sécurité maître, qui provoque un arrêt d'urgence du processus lors de la violation de règles de sécurité et/ou lorsque les consignes des paramètres s'écartent de valeurs limites admissibles, en particulier de l'au moins un dispositif de manipulation (11), dans lequel le moyen de contrôle (60) et le moyen de sécurité (51) fonctionnent indépendamment l'un de l'autre et ne s'influencent pas mutuellement.

15. Système selon l'une quelconque des revendications précédentes, **caractérisé en ce qu'**on utilise en tant que dispositif de manipulation (11) au moins un robot industriel comportant plusieurs, en particulier six, axes et/ou articulations.

16. Système selon l'une quelconque des revendications précédentes, **caractérisé en ce que** le moyen de contrôle (60) comprend un moyen de traitement de données, en particulier un microprocesseur et/ou un automate programmable, et/ou une mémoire de données.

17. Système de commande de processus destiné à commander/réguler au moins un dispositif de manipulation (11) pour exécuter un processus de travail, lequel système comprend un moyen de commande/régulation (50) et un système de commande de sécurité (51) ainsi qu'un système selon l'une quelconque des revendications 1 à 16 précédentes, **caractérisé en ce qu'**un outil de planification, en particulier un « planificateur de mouvement », des motifs de mouvement établis spécifiques du processus et/ou des instructions de manipulation correspondantes pour l'au moins un dispositif de manipulation peuvent être transmis et/ou appliqués au moyen de commande/régulation pour l'au moins un dispositif de manipulation en vue de leur mise en oeuvre et/ou de leur exécution.

18. Système de commande de processus selon la revendication 17, **caractérisé en ce qu'**il est prévu au moins une interface permettant la détection et/ou la transmission d'informations de processus prédéterminées par l'intermédiaire et/ou à destination du moyen de commande/régulation (50) et/ou la détection ainsi que le traitement d'informations de capteurs et/ou d'état de moyens d'entraînement également utilisés.

19. Système de commande de processus selon la revendication 18, caractérisé en ce l'au moins une interface est réalisée sous la forme d'une interface sans fil, en particulier sous la forme d'une interface WLAN, Bluetooth, IR ou GPRS, ou connectée par fil, en particulier sous la forme d'une interface PCI, SCSI, Firewire, LAN, Ethernet, USB ou RS-232, ou également sous la forme d'une interface de bus de terrain, en particulier sous la forme d'une interface PROFIBUS ou CAN-BUS.

20. Procédé pour l'ajustement automatisé de paramètres de processus d'au moins un dispositif de manipulation (11), dans lequel, en coopération avec au moins un moyen de commande/régulation (50), en particulier avec un système de commande de sécurité (51), pour la surveillance et/ou la commande et/ou la régulation d'au moins un dispositif de manipulation (11), au moyen d'au moins un moyen de contrôle (60), au moins un paramètre de processus est surveillé sélectivement et si besoin est ajusté de manière automatisée en coopération avec l'au moins un moyen de commande/régulation (11) en fonction de consignes et/ou de l'environnement et/ou sur la base de règles, dans lequel des consignes et/ou des instructions spécifiques de l'environnement et/ou de la sécurité sont également fixées et/ou mises en oeuvre indépendamment du type du processus de travail respectif, **caractérisé en ce que**, lors de l'utilisation d'une pluralité de dispositifs de manipulation (11), l'ajustement de l'au moins un paramètre de processus d'au moins un dispositif de manipulation (11) est également effectué en fonction ou en tenant compte de la position et/ou de la direction et/ou de la vitesse de l'autre dispositif de manipulation respectif.

21. Procédé selon la revendication 20, **caractérisé en ce que** l'ajustement de l'au moins un paramètre de processus est effectué de manière anticipée.

22. Procédé selon la revendication 20 ou la revendication 21, **caractérisé en ce qu'**une détection et/ou une détermination d'informations d'environnement, en particulier d'informations de capteurs et/ou de commutation et/ou d'état de moyens d'entraînement et/ou de moyens de surveillance utilisés est/sont effectuée(s) et/ou **en ce que** les informations déterminées sont évaluées pour un ajustement des paramètres de processus.

23. Procédé selon l'une quelconque des revendications 20 à 22 précédentes, **caractérisé en ce que** la composition et/ou la structure d'au moins une cellule de travail dans laquelle peuvent être disposés un ou plusieurs dispositifs de manipulation (11) est détectée et/ou utilisée comme base en tant qu'environnement de travail.

24. Procédé selon l'une quelconque des revendications 20 à 23, **caractérisé en ce que** l'ajustement de l'au moins un paramètre de processus de l'au moins un dispositif de manipulation (11) est effectué en fonction de la position et/ou de la direction de l'au moins un dispositif de manipulation (11).

25. Procédé selon l'une quelconque des revendications 20 à 24, **caractérisé en ce que** la détection et/ou la transmission d'informations de processus prédéterminées est effectuée par l'intermédiaire et/ou à destination du moyen de commande/régulation (50), dans lequel la détection et/ou la transmission peut dans ce cas être effectuée sans fil, en particulier par WLAN, Bluetooth, IR ou GPRS, ou de manière connectée par fil, en particulier au moyen d'un bus PCI, SCSI, Firewire, LAN, Ethernet, USB ou RS-232, ou d'un bus PROFIBUS ou CAN-BUS, d'un bus de type Fieldbus Foundation ou Modbus.

26. Procédé selon l'une quelconque des revendications 20 à 25, **caractérisé en ce que** des informations de position sont détectées, évaluées ou utilisées de manière continue ou de manière continue au cours d'intervalles répétitifs et sont utilisées pour la détermination de paramètres et/ou l'ajustement de paramètres.

27. Procédé selon la revendication 26, **caractérisé en ce que** la détection des informations de position est effectuée en coopération avec le moyen de commande/régulation (50) et/ou le système de commande de sécurité (51) et/ou par lecture de capteurs, de générateurs de signaux, de commutateurs de fin de course, ainsi que de positions d'axes, de positions d'articulations, de valeurs de courant/tension des unités d'entraînement du dispositif de manipulation (11) respectif.

28. Procédé selon l'une quelconque des revendications 20 à 27, **caractérisé en ce que** des informations de processus et/ou des informations d'environnement et/ou des instructions de manipulation, en particulier sous la forme moyens de codage de programmes à la fois destinés au moyen de commande/régulation (50) et/ou au moyen de contrôle (60), sont mémorisées dans au moins une mémoire de données de manière à ce qu'elles puissent être appelées et/ou exécutées.

29. Procédé selon l'une quelconque des revendications 25 à 28, **caractérisé en ce qu'**à l'aide d'un outil de planification, en particulier un « planificateur de mouvement », des motifs de mouvement établis spécifiques du processus et/ou d'instructions de manipulation correspondantes pour l'au moins un dispositif de manipulation (11) sont transmis et/ou exécutés pour une mise en oeuvre et/ou une exécution sur le moyen de commande/régulation (50) respectif en préparation du procédé.

30. Procédé selon la revendication 29, **caractérisé en ce que** les instructions de manipulation et/ou les motifs de mouvement respectifs sont uniquement déterminés par le processus de travail respectif et/ou en ce qu'aucune consigne spécifique de l'environnement n'est prise en compte ou n'est comprise.

31. Procédé selon l'une quelconque des revendications 25 à 30, **caractérisé en ce que** l'ajustement de l'au moins un paramètre de processus de l'au moins un dispositif de manipulation (11) est effectué de manière dynamique, c'est-à-dire également dans le cas de conditions ambiantes se modifiant, en particulier comme des modifications d'états de commutation, des informations de capteurs et/ou de position se modifiant, en particulier également d'autres dispositifs de manipulation (11), ou autres.

32. Procédé selon l'une quelconque des revendications 25 à 31, **caractérisé en ce que** l'ajustement de l'au moins un paramètre de processus, c'est-à-dire la modification d'une valeur réelle en une valeur nominale, est effectué en fonction de l'environnement et/ou de consignes au moyen d'une fonction continue, ayant en particulier une forme linéaire, parabolique, exponentielle ou logarithmique, ou au moyen d'une fonction échelon.

33. Procédé selon l'une quelconque des revendications 25 ou 32, **caractérisé en ce qu'**en tant qu'au moins un paramètre de processus, la vitesse et/ou au moins une composante de vitesse et/ou l'orientation et/ou la direction et/ou la position de l'au moins un dispositif de manipulation (11) et/ou de son outil peut être ajustée.

34. Procédé selon l'une quelconque des revendications 25 à 33, **caractérisé en ce que** l'ajustement de l'au moins un paramètre de processus est effectué en ligne et/ou en temps réel, c'est-à-dire au cours du fonctionnement du dispositif de manipulation (11) pendant l'exécution du processus respectif.
